# EUROPEAN PATENT SPECIFICATION

(11) **EP 4 012 652 B1**
(45) Date of publication and mention of the grant of the patent: **05.03.2025**
(21) Application number: 19944000.9
(22) Date of filing: 30.12.2019
(51) Int. Cl.: G06T 7/10, G06T 7/11, G06N 3/045

(54) **IMAGE SEGMENTATION METHOD AND APPARATUS**
BILDSEGMENTIERUNGSVERFAHREN UND -VORRICHTUNG
PROCÉDÉ ET APPAREIL DE SEGMENTATION D'IMAGE

(30) Priority: 06.09.2019 CN 201910844438
(43) Date of publication of application: 15.06.2022
(73) Proprietor: Inspur Electronic Information Industry Co., Ltd, Jinan, Shandong 250101 (CN)
(72) Inventor: WANG, Li, Jinan, Shandong 250101 (CN); GUO, Zhenhua, Jinan, Shandong 250101 (CN); ZHAO, Yaqian, Jinan, Shandong 250101 (CN)
(74) Representative: Groth & Co. KB
(86) International application number: PCT/CN2019/130005
(87) International publication number: WO 2021/042641

(56) References cited:
- CN-A- 109 035 263
- CN-A- 109 300 136
- CN-A- 109 685 819
- CN-A- 109 886 971
- CN-A- 109 886 971
- US-A1- 2019 030 371
- YONGJIN ZHOU ET AL: "D-UNet: a dimension-fusion U shape network for chronic stroke lesion segmentation", ARXIV.ORG, CORNELL UNIVERSITY LIBRARY, 201 OLIN LIBRARY CORNELL UNIVERSITY ITHACA, NY 14853, 14 August 2019 (2019-08-14), XP081462321

## Description

### CROSS REFERENCE TO RELATED APPLICATIONS

This application claims priority to Chinese Patent Application No. 201910844438.0, filed to the CNIPA on September 6, 2019 and entitled "Image Segmentation Method and Apparatus.

### TECHNICAL FIELD

The present disclosure relates to the field of computer vision technology, in particular to an image segmentation method and apparatus.

### BACKGROUD

With the rapid development of society, the development of computer vision technology is also getting faster and faster, especially the image segmentation technology in the computer vision technology. Wherein image segmentation refers to the process of dividing an image into several regions with similar properties.

The existing image segmentation technology is to input an image into a traditional 2D convolutional neural network, extract a feature map of the image through a convolution operation, and then restore the extracted feature map to obtain a segmentation result, namely a segmented image. However, the precision of a segmented image obtained by segmenting an image based on a traditional 2D convolutional neural network is low. Document by YONGJIN ZHOU ET AL., "D-UNet: a dimension-fusion U shape network for chronic stroke lesion segmentation", ARXIV.ORG, CORNELL UNIVERSITY LIBRARY, 201 OLIN LIBRARY CORNELL UNIVERSITY ITHSCA, NY 14853, 14 August 2019 (2019-08-14), XP081462321, discloses a new architecture called dimension-fusion-UNet (D-UNet), which combines 2D and 3D convolution innovatively in the encoding stage. Document CN109886971A discloses an image segmentation method based on a U-Net convolutional neural network.

### SUMMARY

In view of this, the purpose of the present disclosure is to provide an image segmentation method and apparatus to improve the precision of segmented images.

In order to achieve the above purpose, the present disclosure provides the following technical solutions:
a first aspect of the present disclosure discloses an image segmentation method, method according to claim 1, and the method includes:
acquiring an image to be segmented with a height of h, a width of w and a thickness of z; and
determining, by a preset 3D convolutional neural network model, a segmented image of each target object after parameter adjustment in the image to be segmented, wherein the 3D convolutional neural network model is pre-trained based on image sample data, and the 3D convolutional neural network model includes an extraction module, a pixel-level saliency enhancement module, a channel-level saliency enhancement module and a 3D residual deconvolution module; and specifically, the process of determining, by the preset 3D convolutional neural network model, a segmented image of each target object after parameter adjustment in the image to be segmented includes:
extracting, by the extraction module, a first feature map matrix of at least one target object of the image to be segmented;
adjusting, by the pixel-level saliency enhancement module, a parameter in the first feature map matrix of each target object to determine a pixel-level weighting matrix of each target object, wherein the parameter in the first feature map matrix of each target object is the pixel of the target object;
enhancing, by the channel-level saliency enhancement module, a matrix channel in the first feature map matrix of each target object to determine a channel-level weighting matrix of each target object; and
calculating, by the 3D residual deconvolution module, the sum of the pixel-level weighting matrix and the channel-level weighting matrix of each target object to obtain a target matrix of the target object, and carrying out restoration processing on the target matrix after size increase of each target object to determine a segmented image of each target object after parameter adjustment in the image to be segmented; wherein the adjusting, by the pixel-level saliency enhancement module, a parameter in the first feature map matrix of each target object to determine a pixel-level weighting matrix of each target object comprising:
   convolving (h/2)×(w/2)×(z/2)×kernel_size through the 3×3×3×kernel_size convolution layer of the pixel-level saliency enhancement module to obtain a h×w×z×kernel_size feature map matrix, wherein the kernel_size represents the number of channels and also the number of the target objects;
   performing dimensional transformation on the h×w×z×kernel_size feature map matrix to obtain a batchsize×t×kernel_size feature map matrix, specifically, traversing the h×w×z of the target object through the feature map matrix of h×w×z×kernel_size according to batchsize and kernel_size, and expanding h×w×z into a one-dimensional high-dimensional column vector to obtain a batchsize×t×kernel_size feature map matrix, wherein t=h×w×z;
   adjusting the dimension of the t×kernel_size feature map matrix to obtain a kernel_size×t feature map matrix;
   multiplying the kernel_size×t feature map matrix by the t×kernel_size feature map matrix to obtain a t×t feature map matrix;
   performing nonlinear mapping on the t×t feature map matrix through an activation function to obtain a nonlinear t×t feature map matrix;
   performing dimensional transformation on the feature map matrix of at least one target object with the first feature map matrix of (h/2)×(w/2)×(z/2)×kernel_size, specifically, traversing (h/2)×(w/2)×(z/2) of the target object according to batchsize and kernel_size, and expanding (h/2)×(w/2)×(z/2) into a one-dimensional high-dimensional column vector to obtain a batchsize×t1×kernel_size feature map matrix, wherein t1=(h/2)×(w/2)×(z/2), and batchsize is equal to 1;
   performing dimensional transformation on t1 and kernel_size in t1 ×kernel_size to obtain a kernel_size×t1 feature map matrix;
   multiplying the kernel_size×t1 feature map matrix by the nonlinear t×t feature map matrix to obtain a kernel_size×t feature map matrix;
   restoring the kernel_size×t feature map matrix to obtain a kernel_sizet×h×w×z feature map matrix;
   performing dimensional transformation on the kernel_sizet×h×w×z feature map matrix to obtain a h×w×z×kernel_sizet feature map matrix;
   performing weighting summation on the kernel_sizet×h×w×z feature map matrix and the feature map matrix of at least one target object with the first feature map matrix of (h/2) ×(w/2) × (z/2) ×kernel_size with a weighting weight; and
   wherein the enhancing, by the channel-level saliency enhancement module, a matrix channel in the first feature map matrix of each target object to determine a channel-level weighting matrix of each target object comprising:
      convolving the (h/2)x(w/2)x(z/2)xchannel-size first feature map matrix through a 3×3×3×channel_size convolution layer of the channel-level saliency enhancement module to obtain a h×w×z×channel_size feature map matrix, wherein the channel_size represents the number of channels and also the number of target objects;
      performing dimensional transformation on the h×w×z×channel_size feature map matrix to obtain a batchsize×t×channel_size feature map matrix, specifically, traversing the h×w×z of the target object through the feature map matrix of batchsize×h×w×z×channel _size according to batchsize and channel_size, and expanding h×w×z into a one-dimensional high-dimensional column vector to obtain a batchsize×t×channel_size feature map matrix, wherein t=h×w×z;
      performing dimensional transformation on the (h/2)×(w/2)×(z/2)×kernel_size first feature map matrix to obtain a batchsize×t1 ×channel_size feature map matrix, specifically, traversing the (h/2)×(w/2)×(z/2) of the target object through the batchsize×(h/2)×(w/2)×(z/2)×kernel_size first feature map matrix according to batchsize and channel_size, and expanding (h/2)×(w/2)×(z/2) into a one-dimensional high-dimensional column vector to obtain a batchsize×t1channel_size feature map matrix, wherein t=h×w×z;
      performing dimensional transformation on the t1×channel_size feature map matrix to obtain a channel_size×t1 feature map matrix;
      multiplying the t1×channel_size feature map matrix by the channel_size×t1 feature map matrix to obtain a channel_size×channel_size feature map matrix;
      traversing the h×w×z of the target object through the channel_size×channel_size feature map matrix according to batchsize and channel_size, expanding h×w×z into a one-dimensional high-dimensional column vector, and performing a pooling operation on the high-dimensional column vector, that is, changing the vector of each channel_size dimension into a floating-point number to obtain a channel_size×1 feature map matrix;
      performing nonlinear mapping on the channel_size×1 feature map matrix through an activation function to obtain a nonlinear channel_size×1 feature map matrix;
      multiplying the nonlinear channel_size×1 feature map matrix by the channel_size×channel_size feature map matrix to obtain a channel_size×channel_size feature map matrix;
      multiplying the channel_size×channel_size feature map matrix by the t×channel_size feature map matrix to obtain a channel_size×t feature map matrix, wherein the channel_size×t feature map matrix is a three-dimensional feature map matrix;
      traversing the h×w×z of the target object through the channel_size×t feature map matrix according to batchsize and channel_size, expanding h×w×z into a t-dimensional high-dimensional column vector, and performing a pooling operation on the high-dimensional column vector, that is, changing the vector of each channel_size dimension into a floating-point number to obtain a channel_size×1 feature map matrix;
      performing nonlinear mapping on the channel_size×1 feature map matrix through an activation function to obtain a nonlinear channel_size×1 feature map matrix;
      multiplying the nonlinear channel_size×1 feature map matrix by the channel_size×t feature map matrix to obtain a channel_size×t feature map matrix;
      performing dimensional transformation on the channel_size×t feature map matrix, and restoring t to h×w×z to obtain a channel_size×h×w×z feature map matrix;
      performing dimensional interchange on the channel_size×h×w×z feature map matrix to obtain a h×w×z×channel_size feature map matrix; and
      performing weighting summation on the h×w×z×channel_size feature map matrix and the feature map matrix of at least one target object with the first feature map matrix of (h/2)×(w/2)×(z/2)×kernel_size with a weighting weight, that is, enhancing matrix channels in the first feature map matrix of each target object to obtain a channel-level weighting matrix of h1×w1×z1×channel_size of at least one target object.

Optionally, the step of adjusting, by the pixel-level saliency enhancement module, a parameter in the first feature map matrix of each target object to determine a pixel-level weighting matrix of each target object includes:
performing, by the pixel-level saliency enhancement module, dimensional transformation, dimensional adjustment and nonlinear processing on the feature map matrix of each target object to obtain a second feature map matrix of the target object; and
performing weighting summation on the first feature map matrix of each target object and the second feature map matrix of the target object to obtain a pixel-level weighting matrix of each target object.

Optionally, the step of enhancing, by the channel-level saliency enhancement module, a matrix channel in the first feature map matrix of each target object to determine a channel-level weighting matrix of each target object includes:
performing, by the channel-level saliency enhancement module, dimensional transformation, dimensional adjustment and nonlinear processing on the first feature map matrix of each target object to obtain a third feature map matrix of each target object; and
performing weighting summation on the first feature map matrix of each target object and the third feature map matrix of the target object to obtain a channel-level weighting matrix of each target object.

Optionally, the extraction module includes a convolution module and a 3D residual convolution module, and extracting, by the extraction module, a first feature map matrix of at least one target object of the image to be segmented includes:
extracting, by the convolution module, a feature map matrix of at least one target object of the image to be recognized; and
extracting, by the 3D residual convolution module, the feature map matrix of each target object to obtain a first feature map matrix of at least one target object of the image to be recognized.

A second aspect of the present disclosure discloses an image segmentation apparatus according to claim 5 with a height of h, a width of w and a thickness of z, and the apparatus includes:
an acquiring unit, configured to acquire an image to be segmented;
a 3D convolutional neural network model, configured to determine a segmented image of each target object after parameter adjustment in the image to be segmented, wherein the 3D convolutional neural network model is pre-trained based on image sample data, and the 3D convolutional neural network model includes an extraction module, a pixel-level saliency enhancement module, a channel-level saliency enhancement module and a 3D residual deconvolution module;
the extraction module, configured to extract a first feature map matrix of at least one target object of the image to be segmented;
the pixel-level saliency enhancement module, configured to adjust a parameter in the first feature map matrix of each target object to determine a pixel-level weighting matrix of each target object, wherein the parameter in the first feature map matrix of each target object is the pixel of the target object;
the channel-level saliency enhancement module, configured to enhance a matrix channel in the first feature map matrix of each target object to determine a channel-level weighting matrix of each target object; and
the 3D residual deconvolution module, configured to calculate the sum of the pixel-level weighting matrix and the channel-level weighting matrix of each target object to obtain a target matrix of the target object, increasing the size of the target matrix of each target object, and carry out restoration processing on the target matrix after size increase of each target object to determine a segmented image of each target object after parameter adjustment in the image to be segmented; wherein the pixel-level saliency enhancement module is configured to:
   convolve (h/2)×(w/2)×(z/2)×kernel_size through the 3×3×3×kernel_size convolution layer of the pixel-level saliency enhancement module to obtain a h×w×z×kernel_size feature map matrix, wherein the kernel_size represents the number of channels and also the number of the target objects;
   perform dimensional transformation on the h×w×z×kernel_size feature map matrix to obtain a batchsize×t×kernel_size feature map matrix, specifically, traversing the h×w×z of the target object through the feature map matrix of h×w×z×kernel_size according to batchsize and kernel_size, and expanding h×w×z into a one-dimensional high-dimensional column vector to obtain a batchsize×t×kernel_size feature map matrix, wherein t=h×w×z;
   adjust the dimension of the t×kernel_size feature map matrix to obtain a kernel_size×t feature map matrix;
   multiply the kernel_size×t feature map matrix by the t×kernel_size feature map matrix to obtain a t×t feature map matrix;
   perform nonlinear mapping on the t×t feature map matrix through an activation function to obtain a nonlinear t×t feature map matrix;
   perform dimensional transformation on the feature map matrix of at least one target object with the first feature map matrix of (h/2)×(w/2)×(z/2)×kernel_size, specifically, traversing (h/2)×(w/2)×(z/2) of the target object according to batchsize and kernel_size, and expanding (h/2)×(w/2)×(z/2) into a one-dimensional high-dimensional column vector to obtain a batchsize×t1×kernel_size feature map matrix, wherein t1=(h/2)×(w/2)×(z/2), and batchsize is equal to 1;
   perform dimensional transformation on t1 and kernel_size in t1×kernel_size to obtain a kernel_size×t1 feature map matrix;
   multiply the kernel_size×t1 feature map matrix by the nonlinear t×tfeature map matrix to obtain a kernel_size×t feature map matrix;
   restore the kernel_size×t feature map matrix to obtain a kernel_sizet×h×w×z feature map matrix;
   perform dimensional transformation on the kernel_sizet×h×w×z feature map matrix to obtain a h×w×z×kernel_sizet feature map matrix;
   perform weighting summation on the kernel_sizet×h×w×z feature map matrix and the feature map matrix of at least one target object with the first feature map matrix of (h/2)×(w/2)×(z/2)×kernel_size with a weighting weight; and
   wherein the channel-level saliency enhancement module is configured to:
      convolve the (h/2)x(w/2)x(z/2)xchannel-size first feature map matrix through a 3×3×3×channel_size convolution layer of the channel-level saliency enhancement module to obtain a h×w×z×channel_size feature map matrix, wherein the channel_size represents the number of channels and also the number of target objects;
      perform dimensional transformation on the h×w×z×channel_size feature map matrix to obtain a batchsize×t×channel_size feature map matrix, specifically, traversing the h×w×z of the target object through the feature map matrix of batchsize×h×w×z×channel _size according to batchsize and channel_size, and expanding h×w×z into a one-dimensional high-dimensional column vector to obtain a batchsize×t×channel_size feature map matrix, wherein t=h×w×z;
      perform dimensional transformation on the (h/2)×(w/2)×(z/2)×kernel_size first feature map matrix to obtain a batchsize×t1×channel_size feature map matrix, specifically, traversing the (h/2)×(w/2)×(z/2) of the target object through the batchsize×(h/2)×(w/2)×(z/2)×kernel_size first feature map matrix according to batchsize and channel_size, and expanding (h/2)×(w/2)×(z/2) into a one-dimensional high-dimensional column vector to obtain a batchsize×t1×channel_size feature map matrix, wherein t=h×w×z;
      perform dimensional transformation on the t1×channel_size feature map matrix to obtain a channel_size×t1 feature map matrix;
      multiply the t1×channel_size feature map matrix by the channel_size×t1 feature map matrix to obtain a channel_size×channel_size feature map matrix;
      traverse the h×w×z of the target object through the channel_size×channel_size feature map matrix according to batchsize and channel_size, expanding h×w×z into a one-dimensional high-dimensional column vector, and performing a pooling operation on the high-dimensional column vector, that is, changing the vector of each channel_size dimension into a floating-point number to obtain a channel_size×1 feature map matrix;
      perform nonlinear mapping on the channel_size×1 feature map matrix through an activation function to obtain a nonlinear channel_size×1 feature map matrix;
      multiply the nonlinear channel_size×1 feature map matrix by the channel_size×channel_size feature map matrix to obtain a channel_size×channel_size feature map matrix;
      multiply the channel_size×channel_size feature map matrix by the t×channel_size feature map matrix to obtain a channel_size×t feature map matrix, wherein the channel_size×t feature map matrix is a three-dimensional feature map matrix;
      traverse the h×w×z of the target object through the channel_size×t feature map matrix according to batchsize and channel_size, expanding h×w×z into a t-dimensional high-dimensional column vector, and performing a pooling operation on the high-dimensional column vector, that is, changing the vector of each channel_size dimension into a floating-point number to obtain a channel_size×1 feature map matrix;
      perform nonlinear mapping on the channel_size×1 feature map matrix through an activation function to obtain a nonlinear channel_size×1 feature map matrix;
      multiply the nonlinear channel_size×1 feature map matrix by the channel_size×t feature map matrix to obtain a channel_size×t feature map matrix;
      perform dimensional transformation on the channel_size×t feature map matrix, and restoring t to h×w×z to obtain a channel_size×h×w×z feature map matrix;
      perform dimensional interchange on the channel_size×h×w×z feature map matrix to obtain a h×w×z×channel_size feature map matrix;
      perform weighting summation on the h×w×z×channel_size feature map matrix and the feature map matrix of at least one target object with the first feature map matrix of (h/2)×(w/2)×(z/2)×kernel_size with a weighting weight, that is, enhancing matrix channels in the first feature map matrix of each target object to obtain a channel-level weighting matrix of h1×w1×z1×channel_size of at least one target object.

Optionally, a pixel-level weighting matrix determining unit includes:
a second feature map matrix determining unit, configured to perform dimensional transformation, dimensional adjustment and nonlinear processing on the feature map matrix of each target object using the pixel-level saliency enhancement module to obtain a second feature map matrix of the target object; and
a pixel-level weighting matrix determining subunit, configured to perform weighting summation on the first feature map matrix of each target object and the second feature map matrix of the target object to obtain a pixel-level weighting matrix of each target object.

Optionally, a channel-level weighting matrix determining unit includes:
a third feature map matrix determining unit, configured to perform dimensional transformation, dimensional adjustment and nonlinear processing on the first feature map matrix of each target object using the channel-level saliency enhancement module to obtain a third feature map matrix of each target object; and
a channel-level weighting matrix determining subunit, configured to perform weighting summation on the first feature map matrix of each target object and the third feature map matrix of the target object to obtain a channel-level weighting matrix of each target object.

Optionally, the extraction module includes:
a convolution module, configured to extract a feature map matrix of at least one target object of the image to be recognized; and
a 3D residual convolution module, configured to extract the feature map matrix of each target object to obtain a first feature map matrix of at least one target object of the image to be recognized.

The present disclosure provides an image segmentation method and apparatus. The image segmentation method includes: acquiring an image to be segmented, and determining, by a preset 3D convolutional neural network model, a segmented image of each target object after parameter adjustment in the image to be segmented, wherein the 3D convolutional neural network model includes an extraction module, a pixel-level saliency enhancement module, a channel-level saliency enhancement module and a 3D residual deconvolution module; and specifically, the process of determining, by the preset 3D convolutional neural network model, a segmented image of each target object after parameter adjustment in the image to be segmented includes: extracting, by the extraction module, a first feature map matrix of at least one target object of the image to be segmented; adjusting, by the pixel-level saliency enhancement module, a parameter in the first feature map matrix of each target object to determine a pixel-level weighting matrix of each target object, wherein the parameter in the first feature map matrix of each target object is the pixel of the target object; enhancing, by the channel-level saliency enhancement module, a matrix channel in the first feature map matrix of each target object to determine a channel-level weighting matrix of each target object; and calculating, by the 3D residual deconvolution module, the sum of the pixel-level weighting matrix and the channel-level weighting matrix of each target object to obtain a target matrix of the target object, increasing the size of the target matrix of each target object, and carrying out restoration processing on the target matrix after size increase of each target object to determine a segmented image of each target object after parameter adjustment in the image to be segmented. According to the technical solution provided by the present disclosure, by determining a segmented image of each target object after parameter adjustment in the image to be segmented using the preset 3D convolutional neural network model, a high-precision segmented image can be obtained.

### BRIEF DESCRIPTION OF THE DRAWINGS

In order to more clearly describe the embodiments of the present disclosure or the technical solutions in the prior art, the accompanying drawings that need to be used in the embodiments or the description of the prior art will be briefly introduced below. Apparently, the accompanying drawings in the following description are only embodiments of the present disclosure. For those of ordinary skill in the art, other accompanying drawings can be obtained based on these accompanying drawings without creative work.
Fig. 1 is a schematic flowchart of an image segmentation method according to an embodiment of the present disclosure;
Fig. 2 is a schematic flowchart of a method for determining a segmented image of each target object after parameter adjustment in an image to be segmented using a preset 3D convolutional neural network model according to an embodiment of the present disclosure;
Fig. 3 is a structural schematic diagram of a Unet network structure according to an embodiment of the present disclosure; and
Fig. 4 is a structural schematic diagram of an image segmentation apparatus according to an embodiment of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are only a part of the embodiments of the present disclosure, but not all of the embodiments. Based on the embodiments of the present disclosure, all other embodiments obtained by those of ordinary skill in the art without creative labor fall within the scope of protection of the present disclosure.

In this application, the terms "including", "include" or any other variants thereof are intended to cover non-exclusive inclusion, so that a process, method, article or apparatus including a series of elements not only includes those elements, but also includes other elements that are not explicitly listed, or further includes the elements inherent to this process, method, article or apparatus. Without further limitation, an element preceded by the phrase "including a..." does not preclude the presence of additional identical elements in a process, method, article or apparatus that includes the element.

As can be seen from the above background technology, the existing image segmentation technology is to input an image into a traditional 2D convolutional neural network, extract a feature map of the image through a convolution operation, and then restore the extracted feature map to obtain a segmentation result, namely a segmented image. However, the precision of a segmented image obtained by segmenting an image based on a traditional 2D convolutional neural network is low. The existing image segmentation technology can also input an image into a traditional 3D convolutional neural network, extract a feature map of the image through a convolution operation, and then restore the extracted feature map to obtain a segmentation result, namely a segmented image. Although a traditional 3D convolutional neural network can utilize the time series information of a video, the precision of a segmented image obtained by segmenting an image based on a traditional 3D convolutional neural network is low.

Therefore, the embodiments of the present disclosure provide an image segmentation method and apparatus. On the basis of an existing traditional 3D convolutional neural network, a pixel-level saliency enhancement module and a channel-level saliency enhancement module are added, the parameters in a first feature map matrix of each target object are adjusted by the pixel-level saliency enhancement module, and a matrix channel in the first feature map matrix of each target object is enhanced by the channel-level saliency enhancement module, thus a weighting matrix with a better segmentation effect can be obtained, then the size of a target matrix of each target object is increased by the 3D residual deconvolution module, and restoration processing is carried out on the target matrix after size increase of each target object, so that a high-precision segmented image can be obtained.

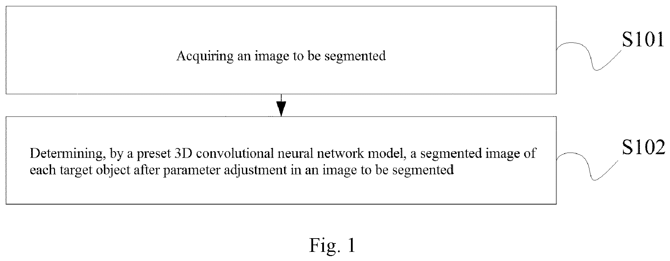

Referring to Fig. 1 which is a schematic flowchart of an image segmentation method according to an embodiment of the present disclosure, and the image segmentation method includes the following steps:
S101: acquiring an image to be segmented.

During the specific execution of step S101, a single image to be segmented can be obtained, or N consecutive images to be segmented can be obtained, wherein N is a positive integer greater than or equal to 1.

It should be noted that the acquired image to be segmented may be a grayscale image or a color image.

S102: determining, by a preset 3D convolutional neural network model, a segmented image of each target object after parameter adjustment in an image to be segmented.

In the embodiment of the present disclosure, the 3D convolutional neural network model is obtained by pre-training based on image sample data. The specific training process is as follows: obtaining at least one image sample, wherein each image sample in the at least one image sample includes corresponding image sample data, inputting the image sample data of each image sample into a 3D convolutional neural network model to be trained to obtain a predicted segmented image of the image sample by the 3D convolutional neural network model to be trained, and updating the parameters in the 3D convolutional neural network model to be trained with the predicted segmented image approaching a target segmented image as the training target until the 3D convolutional neural network model to be trained converges, thus the 3D convolutional neural network model is obtained.

It should be noted that the 3D convolutional neural network model includes an extraction module, a pixel-level saliency enhancement module, a channel-level saliency enhancement module and a 3D residual deconvolution module.

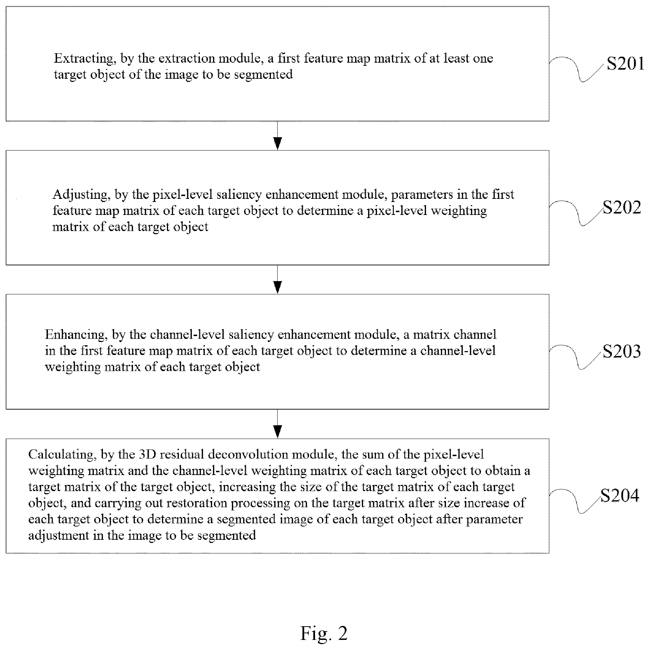

Specifically, the process of determining, by a preset 3D convolutional neural network model, a segmented image of each target object after parameter adjustment in the image to be segmented is shown in Fig. 2, and includes the following steps:
S201: extracting, by the extraction module, a first feature map matrix of at least one target object of the image to be segmented.

It should be noted that the extraction module includes a convolution module and a 3D residual convolution module.

During the specific execution of step S201, the feature map matrix of at least one target object of the image to be segmented is extracted by the convolution module, and a feature matrix of each target object is extracted by the 3D residual convolution module to obtain the first feature map matrix of at least one target object of the image to be segmented.

It should be noted that the convolution module includes a 3D convolution layer, a batch normalization layer and an activation function layer; the 3D residual convolution module includes a first batch normalization layer, a first activation function layer, a first 3D convolution layer, a second batch normalization layer, a second activation function layer, a second 3D convolution layer, a third 3D convolution layer and an Add layer.

In order to better understand the above content, an example is given below.

For example, an image to be segmented with a height of h, a width of w and a thickness of z is acquired. For ease of understanding, acquiring one image to be segmented is taken as an example.

Firstly, when the height of the acquired single image to be segmented is h, the width is w, and the thickness is z, the acquired image to be segmented is sequentially input into the 3D convolution layer conv3d with the convolution kernel having dimension of 3×3×3×kernel_size, the batch normalization layer BN with the convolution kernel having dimension of h×w×z×kernel_size and the activation function layer Relu with the convolution kernel having dimension of h×w×z×kernel_size in the convolution module with the number of channels being CHANNEL to extract the feature map matrix, and the feature map matrix of the target object with the number of channels of kernel_size is obtained, wherein the height of the feature map matrix of the target object is h, the width is w, and the thickness is z.

Secondly, the obtained feature map matrix of the target object with the number of channels of kernel_size is input into the first batch normalization layer BN1, the first activation function layer Relu1, the 3×3×3×kernel_size first 3D convolution layer conv3d1, the second batch normalization layer BN2, the second activation function layer Relu2, the 3×3×3×kernel_size second 3D convolution layer conv3d2 in the 3D residual convolution module with the number of channels, to obtain a first result matrix with a height of h/2, a width of w/2 and a thickness of z/2 and with the number of channels of kernel_size.

Thirdly, the obtained feature map matrix of the target object with the number of channels of kernel_size is input into the third 3D convolution layer conv3d2 in the 3D residual convolution module with the number of channels to obtain a second result matrix with a height of h/2, a width of w/2 and a thickness of z/2 and with the number of channels of kernel_size.

Finally, the first result matrix and the second result matrix are input into the Add layer to obtain the first feature map matrix of the target object with the number of channels of kernel_size, wherein the height of the first feature map matrix of the target object is h/2, the width is w/2, the thickness is z/2, that is, after the image to be segmented with the height of h, the width of w and the thickness of z is processed by the convolution module and the 3D residual convolution module, the first feature map matrix of at least one target object is obtained as (h/2)×(w/2)×(z/2)×kernel_size.

It should be noted that CHANNEL represents both the number of channels and the number of target objects. The specific value of the channel can be set by the inventor according to his/her own needs, which is not limited in the embodiment of the present disclosure.

It should be noted that every time after the feature map matrix of the target object is further extracted by a 3D residual convolution module, the height, width and thickness of the obtained first feature map matrix of the target object are reduced to half of the original height, width and thickness, and the number of channels of the first feature map matrix of the target object is several times or even dozens of times the original number of channels. For example, when the preset 3D convolutional neural network includes one 3D residual convolution module, after processing by the 3D residual convolution module, the height, width and thickness of the first feature map matrix of the target object are reduced to half of the original height, width and thickness, and when the preset 3D convolutional neural network includes two 3D residual convolution modules, after processing by the two 3D residual convolution modules, the height, width and thickness of the first feature map matrix of the target object are reduced to a quarter of the original height, width and thickness.

The above description is only the preferred way of the number of the 3D residual convolution modules in the preset 3D convolutional neural network provided by the embodiment of this application. Specifically, the number can be set by the inventor according to his/her own needs, which is not limited in the embodiment of the present disclosure.

S202: adjusting, by the pixel-level saliency enhancement module, parameters in the first feature map matrix of each target object to determine a pixel-level weighting matrix of each target object.

Wherein the parameters in the first feature map matrix of each target object are the pixels of each target object.

During the specific execution of step S202, dimensional transformation, dimensional adjustment and nonlinear processing are carried out on the first feature map matrix of each target object using the pixel-level saliency enhancement module to obtain a second feature map matrix of the target object, and weighting summation is carried out on the first feature map matrix of each target object and the second feature map matrix of the target object to obtain the pixel-level weighting matrix of each target object.

In order to better understand the above content, an example is given below.

For example, an image to be segmented with a height of h, a width of w and a thickness of z is acquired. For ease of understanding, acquiring one image to be segmented is taken as an example.

After the image to be segmented with the height of h, the width of w and the thickness of z is processed by the convolution module and the 3D residual convolution module of the extraction module, a feature map matrix of at least one target object with a first feature map matrix of (h/2)×(w/2)×(z/2)×kernel_size is obtained.

A1. Convolving (h/2)×(w/2)×(z/2)×kernel_size through the 3×3×3×kernel_size convolution layer of the pixel-level saliency enhancement module to obtain a h×w×z×kernel_size feature map matrix, wherein h represents height, w represents width, z represents thickness, and kernel_size represents the number of channels, and also the number of target objects.

A2. Performing dimensional transformation on the h×w×z×kernel_size feature map matrix to obtain a batchsize×t×kernel_size feature map matrix, specifically, traversing the h×w×z of the target object through the feature map matrix of h×w×z×kernel_size according to batchsize and kernel_size, and expanding h×w×z into a one-dimensional high-dimensional column vector to obtain a batchsize×t×kernel_size feature map matrix, wherein t=h×w×z.

It should be noted that since the number of the acquired images to be segmented is 1, batchsize is 1, and further batchsize×t×kernel_size is equal to t×kernel_size.

A3. Adjusting the dimension of the t×kernel_size feature map matrix to obtain a kernel_size×t feature map matrix.

A4. Multiplying the kernel_size×t feature map matrix by the t×kernel_size feature map matrix to obtain a t×t feature map matrix.

It should be noted that in the process of multiplying the kernel_size×t feature map matrix by the t×kernel_size feature map matrix, if batchsize is a positive integer greater than 1, matrixes in the batchsize×kernel_size×t feature map matrix need to be multiplied by matrixes in the batchsize×t×kernel_size feature map matrix in one-to-one correspondence.

A5. Performing nonlinear mapping on the t×t feature map matrix through an activation function to obtain a nonlinear t×t feature map matrix.

A6. Performing dimensional transformation on the feature map matrix of at least one target object with the first feature map matrix of (h/2)×(w/2)×(z/2)×kernel_size, specifically, traversing (h/2)×(w/2)×(z/2) of the target object according to batchsize and kernel_size, and expanding (h/2)×(w/2)×(z/2) into a one-dimensional high-dimensional column vector to obtain a batchsize×t1×kernel_size feature map matrix, wherein t1=(h/2)×(w/2)×(z/2), and batchsize is equal to 1.

A7. Performing dimensional transformation on t1 and kernel_size in t1×kernel_size to obtain a kernel_size×t1 feature map matrix.

A8. Multiplying the kernel_size×t1 feature map matrix by the nonlinear t×t feature map matrix to obtain a kernel_size×t feature map matrix.

It should be noted that in the process of multiplying the kernel_size×t1 feature map matrix by the nonlinear t×tfeature map matrix, if batchsize is a positive integer greater than 1, matrixes in the batchsize×kernel_size×t1 feature map matrix need to be multiplied by matrixes in the batchsize×t×1 feature map matrix in one-to-one correspondence.

A9. Restoring the kernel_size×t feature map matrix to obtain a kernel_sizet×h×w×z feature map matrix.

A10. Performing dimensional transformation on the kernel_sizet×h×w×z feature map matrix to obtain a h×w×z×kernel_sizet feature map matrix.

A11. Performing weighting summation on the kernel_sizet×h×w×z feature map matrix and the feature map matrix of at least one target object with the first feature map matrix of (h/2)×(w/2)×(z/2)×kernel_size with a weighting weight of alpha*(step10.result)+ input, that is, adjusting the pixels in the first feature map matrix of each target object to obtain a pixel-level weighting matrix of h1×w1×z1×kernel_sizet of at least one target object, wherein kernel_sizet is the number of target objects.

S203: enhancing, by the channel-level saliency enhancement module, a matrix channel in the first feature map matrix of each target object to determine a channel-level weighting matrix of each target object.

During the specific execution of step S203, dimensional transformation, dimensional adjustment and nonlinear processing are carried out on the first feature map matrix of each target object through the channel-level saliency enhancement module to obtain a third feature map matrix of each target object, and weighting summation is carried out on the first feature map matrix of each target object and the third feature map matrix of the target object to obtain the channel-level weighting matrix of each target object.

In order to better understand the above content, an example is given below.

For example, an image to be segmented with a height of h, a width of w and a thickness of z is acquired. For ease of understanding, acquiring an image to be segmented is taken as an example.

After the image to be segmented with the height of h, the width of w and the thickness of z is processed by the convolution module and the 3D residual convolution module of the extraction module, a feature map matrix of at least one target object with the first feature map matrix of (h/2)×(w/2)×(z/2)×kernel_size is obtained, wherein kernel_size is the number of target objects.

B1. Convolving the (h/2)x(w/2)x(z/2)xchannel-size first feature map matrix through a 3×3×3×channel_size convolution layer of the channel-level saliency enhancement module to obtain a h×w×z×channel_size feature map matrix, wherein h represents height, w represents width, z represents thickness, and channel_size represents the number of channels, and also the number of target objects.

B2. Performing dimensional transformation on the h×w×z×channel_size feature map matrix to obtain a batchsize×t×channel_size feature map matrix, specifically, traversing the h×w×z of the target object through the feature map matrix of batchsize×h×w×z×channel _size according to batchsize and channel_size, and expanding h×w×z into a one-dimensional high-dimensional column vector to obtain a batchsize×t×channel_size feature map matrix, wherein t=h×w×z.

It should be noted that since the number of the acquired images to be segmented is 1, batchsize is 1, and further batchsize×t×channel_size is equal to txchannel size.

B3. Performing dimensional transformation on the (h/2)×(w/2)×(z/2) ×kernel_size first feature map matrix to obtain a batchsize×t1×channel_size feature map matrix, specifically, traversing the (h/2)×(w/2)×(z/2) of the target object through the batchsize×(h/2)×(w/2)×(z/2)×kernel_size first feature map matrix according to batchsize and channel_size, and expanding (h/2)×(w/2)×(z/2) into a one-dimensional high-dimensional column vector to obtain a batchsize×t1×channel_size feature map matrix, wherein t=h×w×z.

It should be noted that since the number of the acquired images to be segmented is 1, batchsize is 1, and further batchsize×t1×channel_size is equal to t1×channel_size.

B4. Performing dimensional transformation on the t1×channel_size feature map matrix to obtain a channel_size×t1 feature map matrix.

B5. Multiplying the t1×channel_size feature map matrix by the channel_size×t1 feature map matrix to obtain a channel_size×channel_size feature map matrix.

It should be noted that in the process of multiplying the t1×channel_size feature map matrix by the channel_size×t1 feature map matrix, if batchsize is a positive integer greater than 1, matrixes in the batchsize×channel_size×t1 feature map matrix need to be multiplied by matrixes in the batchsize×t1×channel_size feature map matrix in one-to-one correspondence.

B6. Traversing the h×w×z of the target object through the channel_size×channel_size feature map matrix according to batchsize and channel_size, expanding h×w×z into a one-dimensional high-dimensional column vector, and performing a pooling operation on the high-dimensional column vector, that is, changing the vector of each channel_size dimension into a floating-point number to obtain a channel_size×1 feature map matrix.

It should be noted that the pooling operation may be a maxpoolling operation or an averagePooling operation. The inventor can make settings according to requirements, which is not limited in the embodiment of the present disclosure.

B7. Performing nonlinear mapping on the channel_size×1 feature map matrix through an activation function to obtain a nonlinear channel_size×1 feature map matrix.

It should be noted that the activation function of the channel-level saliency enhancement module may be a sigmoid function. The inventor can make selections according to actual needs, which is not limited in the embodiment of the present disclosure.

B8. Multiplying the nonlinear channel_size×1 feature map matrix by the channel_size×channel_size feature map matrix to obtain a channel_size×channel_size feature map matrix.

It should be noted that in the process of multiplying the nonlinear channel_size×1 feature map matrix by the channel_size×channel_size feature map matrix, elements (parameters) in the channel_size×1 feature map matrix need to be multiplied by elements (parameters) in the channel_size×channel_size feature map matrix in one-to-one correspondence.

B9. Multiplying the channel_size×channel_size feature map matrix by the t×channel_size feature map matrix to obtain a channel_size×t feature map matrix, wherein the channel_size×t feature map matrix is a three-dimensional feature map matrix.

It should be noted that in the process of multiplying the channel_size×channel_size feature map matrix by the t×channel_size feature map matrix, if batchsize is a positive integer greater than 1, matrixes in the batchsize×channel_size×channel_size feature map matrix need to be multiplied by matrixes in the batchsize×t×channel_size feature map matrix in one-to-one correspondence.

B10. Traversing the h×w×z of the target object through the channel_size×t feature map matrix according to batchsize and channel_size, expanding h×w×z into a t-dimensional high-dimensional column vector, and performing a pooling operation on the high-dimensional column vector, that is, changing the vector of each channel_size dimension into a floating-point number to obtain a channel_size×1 feature map matrix.

B11. Performing nonlinear mapping on the channel_size×1 feature map matrix through an activation function to obtain a nonlinear channel_size×1 feature map matrix.

It should be noted that the activation function of the channel-level saliency enhancement module may be a sigmoid function. The inventor can make selections according to actual needs, which is not limited in the embodiment of the present disclosure.

B12. Multiplying the nonlinear channel_size×1 feature map matrix by the channel_size×t feature map matrix to obtain a channel_size×t feature map matrix.

It should be noted that in the process of multiplying the nonlinear channel_size×1 feature map matrix by the channel_size×t feature map matrix, elements (parameters) in the channel_size×1 feature map matrix need to be multiplied by elements (parameters) in the channel_size×t feature map matrix in one-to-one correspondence.

B13. Performing dimensional transformation on the channel_size×t feature map matrix, and restoring t to h×w×z to obtain a channel_size×h×w×z feature map matrix.

B14. Performing dimensional interchange on the channel_size×h×w×z feature map matrix to obtain a h×w×z×channel_size feature map matrix.

B15. Performing weighting summation on the h×w×z×channel_size feature map matrix and the feature map matrix of at least one target object with the first feature map matrix of (h/2)×(w/2)×(z/2)×kernel_size with a weighting weight of beta*(step15.result)+ input, that is, enhancing matrix channels in the first feature map matrix of each target object to obtain a channel-level weighting matrix of h1×w1×z1×channel_size of at least one target object, wherein channel_size is the number of target objects.

Further, in the process of performing step S202 and step S203, step S202 and step S203 can be performed simultaneously, or step S202 can be performed followed by step S203. The execution sequence of step S202 and step S203 can be set by the inventor according to his/her own needs, which is not limited in the embodiment of the present disclosure.

S204: calculating, by the 3D residual deconvolution module, the sum of the pixel-level weighting matrix and the channel-level weighting matrix of each target object to obtain a target matrix of the target object, increasing the size of the target matrix of each target object, and carrying out restoration processing on the target matrix after size increase of each target object to determine a segmented image of each target object after parameter adjustment in the image to be segmented.

It should be noted that the 3D residual deconvolution module includes a deconvolution Deconv3d layer, a conv3d1 layer, a BN1 layer, a Relu1 layer, a BN2 layer, a Relu2 layer, a conv3d2 layer, a BN2 layer, a Relu3 layer, a conv3d3 layer and an add layer.

In the specific process of performing step S204, the sum of the pixel-level weighting matrix and the channel-level weighting matrix of each target object is calculated to obtain the target matrix of the target object, and the target matrix is sequentially input into the deconvolution Deconv3d layer, the conv3d1 layer, the BN1 layer and the Relu1 layer for processing to obtain a first matrix, the first matrix is sequentially input into the BN2 layer, the Relu2 layer, the conv3d2 layer, the BN2 layer, the Relu3 layer and the conv3d3 layer for processing to obtain a second matrix, the first matrix and the second matrix are input into the Add layer for processing, the size of the target matrix of each target object is increased, and restoration processing is carried out on the target matrix after size increase of each target object to determine the segmented image of each target object after parameter adjustment in the image to be segmented.

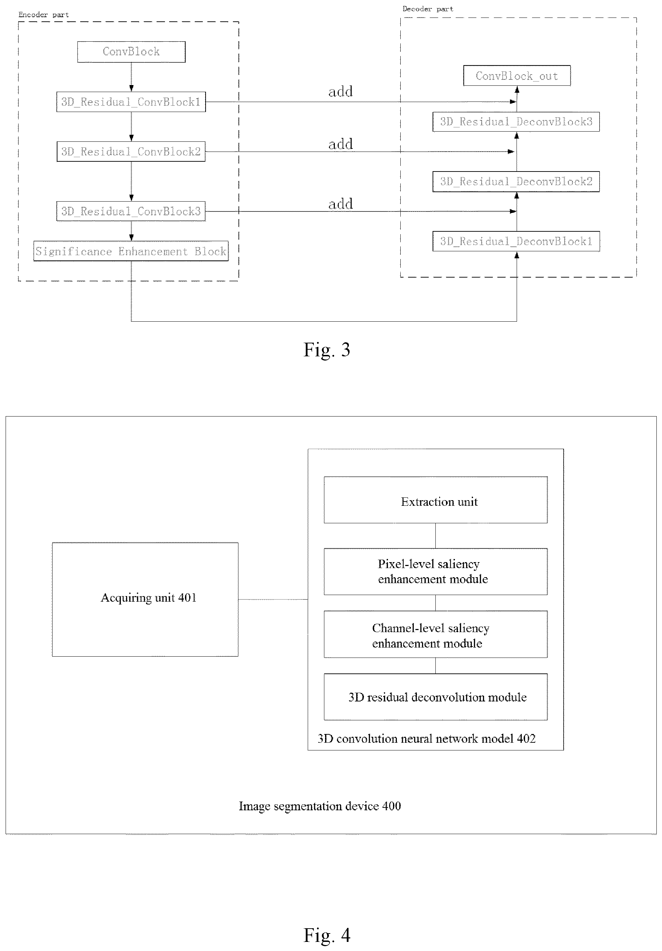

Further, in the embodiment of the present disclosure, when the 3D convolutional neural network model includes one 3D residual convolution module, the 3D convolutional neural network model correspondingly includes one 3D residual deconvolution module. When the 3D convolutional neural network model includes three 3D residual convolution modules, the 3D convolutional neural network correspondingly includes three 3D residual deconvolution modules. For example, when the 3D convolutional neural network model is a Unet network structure, as shown in Fig. 3, the Unet network structure includes two parts, namely an Encoder and a Decoder. The Encoder includes a convolution module ConvBlock, three residual convolution modules 3D_Residual_ConvBlock, a pixel-level saliency enhancement module and a channel-level saliency enhancement module Saliency Enhancement Block, the Decoder includes three residual deconvolution modules 3D_Residual_DeConvBlock corresponding to the three residual convolution modules 3D_Residual_ConvBlock, and a ConvBlock_Out. In the process of processing the weighting matrix of each target object through the 3D residual deconvolution modules, every time after one 3D residual deconvolution module is used to calculate the sum of the pixel-level weighting matrix and the channel-level weighting matrix of each target object to obtain the target matrix of the target object and increase the size of the target matrix of each target object, the target matrix after size increase and the output of the corresponding 3D residual convolution module are combined and input into the next 3D residual deconvolution module until the output of the last 3D residual deconvolution module is combined with the output of the corresponding 3D residual convolution module, the result is input into the ConvBlock_Out to further increase the size of the target matrix of each target object, and restoration processing is carried out on the target matrix after size increase of each target object to determine the segmented image of each target object after parameter adjustment in the image to be segmented.

The present disclosure provides an image segmentation method and apparatus. The image segmentation method includes: acquiring an image to be segmented, inputting the image to be segmented into a 3D convolutional neural network model, and determining a segmented image of each target object after parameter adjustment in the image to be segmented through the preset 3D convolutional neural network model, wherein the process of determining a segmented image of each target object after parameter adjustment in the image to be segmented through the preset 3D convolutional neural network model specifically includes: extracting, by an extraction module, a first feature map matrix of at least one target object of the image to be segmented; adjusting, by a pixel-level saliency enhancement module, the parameters in the first feature map matrix of each target object to determine a pixel-level weighting matrix of each target object, wherein the parameters in the first feature map matrix of each target object are the pixels of the target object; enhancing, by the channel-level saliency enhancement module, a matrix channel in the first feature map matrix of each target object to determine a channel-level weighting matrix of each target object; and calculating, by a 3D residual deconvolution module, the sum of the pixel-level weighting matrix and the channel-level weighting matrix of each target object to obtain a target matrix of the target object, increasing the size of the target matrix of each target object, and carrying out restoration processing on the target matrix after size increase of each target object to determine a segmented image of each target object after parameter adjustment in the image to be segmented. According to the technical solution provided by the present disclosure, by determining a segmented image of each target object after parameter adjustment in the image to be segmented through the preset 3D convolutional neural network model, a high-precision segmented image can be obtained.

Based on the image segmentation method disclosed in the embodiment of the present disclosure, the embodiment of the present disclosure further discloses an image segmentation apparatus correspondingly. As shown in Fig. 4, the image segmentation apparatus 400 includes:
an acquiring unit 401, configured to acquire an image to be segmented;
a 3D convolutional neural network model 402, configured to determine a segmented image of each target object after parameter adjustment in the image to be segmented, wherein the 3D convolutional neural network model is pre-trained based on image sample data, and the 3D convolutional neural network model includes an extraction module, a pixel-level saliency enhancement module, a channel-level saliency enhancement module and a 3D residual deconvolution module;
the extraction module, configured to extract a first feature map matrix of at least one target object of the image to be segmented;
the pixel-level saliency enhancement module, configured to adjust the parameters in the first feature map matrix of each target object to determine a pixel-level weighting matrix of each target object, wherein the parameters in the first feature map matrix of each target object are the pixels of the target object;
the channel-level saliency enhancement module, configured to enhance a matrix channel in the first feature map matrix of each target object to determine a channel-level weighting matrix of each target object; and
the 3D residual deconvolution module, configured to calculate the sum of the pixel-level weighting matrix and the channel-level weighting matrix of each target object to obtain a target matrix of the target object, increase the size of the target matrix of each target object, and carry out restoration processing on the target matrix after size increase of each target object to determine a segmented image of each target object after parameter adjustment in the image to be segmented.

The present disclosure provides an image segmentation apparatus, wherein an image to be segmented is acquired by an acquiring unit, and a segmented image of each target object after parameter adjustment in the image to be segmented is determined by a preset 3D convolutional neural network model, wherein the 3D convolutional neural network model includes an extraction module, a pixel-level saliency enhancement module, a channel-level saliency enhancement module and a 3D residual deconvolution module; a first feature map matrix of at least one target object of the image to be segmented is extracted by the extraction module, the parameters in the first feature map matrix of each target object are adjusted by the pixel-level saliency enhancement module to determine a pixel-level weighting matrix of each target object, a matrix channel in the first feature map matrix of each target object is enhanced by the channel-level saliency enhancement module to determine a channel-level weighting matrix of each target object, and the sum of the pixel-level weighting matrix and the channel-level weighting matrix of each target object are calculated by the 3D residual deconvolution module to obtain a target matrix of the target object, the size of the target matrix of each target object is increased, and restoration processing is carried out on the target matrix after size increase of each target object to determine a segmented image of each target object after parameter adjustment in the image to be segmented. According to the technical solution provided by the present disclosure, by determining a segmented image of each target object after parameter adjustment in the image to be segmented through the preset 3D convolutional neural network model, a high-precision segmented image can be obtained.

Optionally, a pixel-level weighting matrix determining unit includes:
a second feature map matrix determining unit, configured to perform dimensional transformation, dimensional adjustment and nonlinear processing on the feature map matrix of each target object using the pixel-level saliency enhancement module to obtain a second feature map matrix of the target object; and
a pixel-level weighting matrix determining subunit, configured to perform weighting summation on the first feature map matrix of each target object and the second feature map matrix of the target object to obtain a pixel-level weighting matrix of each target object.

Optionally, a channel-level weighting matrix determining unit includes:
a third feature map matrix determining unit, configured to perform dimensional transformation, dimensional adjustment and nonlinear processing on the first feature map matrix of each target object using the channel-level saliency enhancement module to obtain a third feature map matrix of each target object; and
a channel-level weighting matrix determining subunit, configured to perform weighting summation on the first feature map matrix of each target object and the third feature map matrix of the target object to obtain a channel-level weighting matrix of each target object.

Optionally, the extraction module includes:
a convolution module, configured to extract a feature map matrix of at least one target object of the image to be recognized; and
a 3D residual convolution module, configured to extract the feature map matrix of each target object to obtain a first feature map matrix of at least one target object of the image to be recognized.

The embodiments in this description are described in a progressive manner, the same and similar parts between the various embodiments can be referred to each other, and each embodiment focuses on the differences from other embodiments. Especially for the system or the system embodiment, since it is basically similar to the method embodiment, the description is relatively simple, and related parts can refer to the description of the method embodiment section. The system and system embodiment described above are only illustrative, wherein the units described as separate components may or may not be physically separated, and the components shown as units may or may not be physical units, that is, the components may be located in one place, or may be distributed to multiple network units. Some or all of the modules can be selected according to actual needs to achieve the objects of the solutions of the embodiments. Those of ordinary skill in the art can understand and implement without creative work.

Those of ordinary skill in the art may further realize that the units and algorithm steps of each example described in conjunction with the embodiments disclosed herein can be implemented in electronic hardware, computer software or a combination of electronic hardware and computer software. In order to clearly illustrate the interchangeability of hardware and software, the components and steps of each example have been generally described in terms of functions in the foregoing description. Whether these functions are performed in hardware or software depends on the specific application and design constraints of the technical solutions. Professionals may implement the described functionality using different methods for each particular application, but such implementations should not be considered beyond the scope of this application.

The above description of the disclosed embodiments enables any person skilled in the art to implement or use this application. Various modifications to these embodiments are apparent to those skilled in the art, and the general principles defined herein may be implemented in other embodiments without departing from the scope of this application. Therefore, this application is not intended to be limited to the embodiments shown herein, but is to be accorded the widest scope consistent with the appended claims.

The above embodiments are only the preferred embodiments of this application. It should be pointed out that those of ordinary skill in the art can make several improvements and modifications without departing from the principles of this application, and these improvements and modifications should also be regarded as falling within the protection scope of this applicatior as defined by the appended claims.

## Claims

1. An computer-implemented image segmentation method, **characterized by** comprising:
acquiring (S101) an image to be segmented with a height of h, a width of w and a thickness of z; and
determining (S102), by a preset 3D convolutional neural network model, a segmented image of each target object after parameter adjustment in the image to be segmented, wherein the 3D convolutional neural network model is pre-trained based on image sample data, and the 3D convolutional neural network model comprises an extraction module, a pixel-level saliency enhancement module, a channel-level saliency enhancement module and a 3D residual deconvolution module; and specifically, the process of determining, by the preset 3D convolutional neural network model, a segmented image of each target object after parameter adjustment in the image to be segmented comprises:
extracting (S201), by the extraction module, a first feature map matrix of at least one target object of the image to be segmented;
adjusting (S202), by the pixel-level saliency enhancement module, a parameter in the first feature map matrix of each target object to determine a pixel-level weighting matrix of each target object, wherein the parameter in the first feature map matrix of each target object is the pixel of the target object;
enhancing (S203), by the channel-level saliency enhancement module, a matrix channel in the first feature map matrix of each target object to determine a channel-level weighting matrix of each target object; and
calculating (S204), by the 3D residual deconvolution module, the sum of the pixel-level weighting matrix and the channel-level weighting matrix of each target object to obtain a target matrix of the target object, increasing the size of the target matrix of each target object, and carrying out restoration processing on the target matrix after size increase of each target object to determine a segmented image of each target object after parameter adjustment in the image to be segmented;
wherein the adjusting (S202), by the pixel-level saliency enhancement module, a parameter in the first feature map matrix of each target object to determine a pixel-level weighting matrix of each target object comprising:
convolving (h/2)×(w/2)×(z/2)×kernel_size through the 3×3×3×kernel_size convolution layer of the pixel-level saliency enhancement module to obtain a h×w×z×kernel_size feature map matrix, wherein the kernel_size represents the number of channels and also the number of the target objects;
performing dimensional transformation on the h×w×z×kernel_size feature map matrix to obtain a batchsize×t×kernel_size feature map matrix, specifically, traversing the h×w×z of the target object through the feature map matrix of h×w×z×kernel_size according to batchsize and kernel_size, and expanding h×w×z into a one-dimensional high-dimensional column vector to obtain a batchsize×t×kernel_size feature map matrix, wherein t=h×w×z;
adjusting the dimension of the t×kernel_size feature map matrix to obtain a kernel_size×t feature map matrix;
multiplying the kernel_size×t feature map matrix by the t×kernel_size feature map matrix to obtain a t×t feature map matrix;
performing nonlinear mapping on the t×t feature map matrix through an activation function to obtain a nonlinear t×t feature map matrix;
performing dimensional transformation on the feature map matrix of at least one target object with the first feature map matrix of (h/2)×(w/2)×(z/2)×kernel_size, specifically, traversing (h/2)×(w/2)×(z/2) of the target object according to batchsize and kernel_size, and expanding (h/2)×(w/2)×(z/2) into a one-dimensional high-dimensional column vector to obtain a batchsize×t1×kernel_size feature map matrix, wherein t1=(h/2)×(w/2)×(z/2), and batchsize is equal to 1;
performing dimensional transformation on t1 and kernel_size in t1×kernel_size to obtain a kernel_size×t1 feature map matrix;
multiplying the kernel_size×t1 feature map matrix by the nonlinear t×tfeature map matrix to obtain a kernel_size×t feature map matrix;
restoring the kernel_size×t feature map matrix to obtain a kernel_sizet×h×w×z feature map matrix;
performing dimensional transformation on the kernel_sizet×h×w×z feature map matrix to obtain a h×w×z×kernel_sizet feature map matrix;
performing weighting summation on the kernel_sizet×h×w×z feature map matrix and the feature map matrix of at least one target object with the first feature map matrix of (h/2)×(w/2)×(z/2)×kernel_size with a weighting weight; and
wherein the enhancing (S203), by the channel-level saliency enhancement module, a matrix channel in the first feature map matrix of each target object to determine a channel-level weighting matrix of each target object comprising:
convolving the (h/2)x(w/2)x(z/2)xchannel-size first feature map matrix through a 3×3×3×channel_size convolution layer of the channel-level saliency enhancement module to obtain a h×w×z×channel_size feature map matrix, wherein the channel _size represents the number of channels and also the number of target objects;
performing dimensional transformation on the h×w×z×channel_size feature map matrix to obtain a batchsize×t×channel_size feature map matrix, specifically, traversing the h×w×z of the target object through the feature map matrix of batchsize×h×w×z×channel _size according to batchsize and channel_size, and expanding h×w×z into a one-dimensional high-dimensional column vector to obtain a batchsize×t×channel_size feature map matrix, wherein t=h×w×z;
performing dimensional transformation on the (h/2)×(w/2)×(z/2)×kernel_size first feature map matrix to obtain a batchsize×t1×channel_size feature map matrix, specifically, traversing the (h/2)×(w/2)×(z/2) of the target object through the batchsize×(h/2)×(w/2)×(z/2)×kernel_size first feature map matrix according to batchsize and channel_size, and expanding (h/2)×(w/2)×(z/2) into a one-dimensional high-dimensional column vector to obtain a batchsize×t1×channel_size feature map matrix, wherein t=h×w×z;
performing dimensional transformation on the t1×channel_size feature map matrix to obtain a channel_size×t1 feature map matrix;
multiplying the t1×channel_size feature map matrix by the channel_size×t1 feature map matrix to obtain a channel_size×channel_size feature map matrix;
traversing the h×w×z of the target object through the channel_size×channel_size feature map matrix according to batchsize and channel_size, expanding h×w×z into a one-dimensional high-dimensional column vector, and performing a pooling operation on the high-dimensional column vector, that is, changing the vector of each channel_size dimension into a floating-point number to obtain a channel_size×1 feature map matrix;
performing nonlinear mapping on the channel_size×1 feature map matrix through an activation function to obtain a nonlinear channel_size×1 feature map matrix;
multiplying the nonlinear channel_size×1 feature map matrix by the channel_size×channel_size feature map matrix to obtain a channel_size×channel_size feature map matrix;
multiplying the channel_size×channel_size feature map matrix by the t×channel_size feature map matrix to obtain a channel_size×t feature map matrix, wherein the channel_size×t feature map matrix is a three-dimensional feature map matrix;
traversing the h×w×z of the target object through the channel_size×t feature map matrix according to batchsize and channel_size, expanding h×w×z into a t-dimensional high-dimensional column vector, and performing a pooling operation on the high-dimensional column vector, that is, changing the vector of each channel_size dimension into a floating-point number to obtain a channel_size×1 feature map matrix;
performing nonlinear mapping on the channel_size×1 feature map matrix through an activation function to obtain a nonlinear channel_size×1 feature map matrix;
multiplying the nonlinear channel_size×1 feature map matrix by the channel_size×t feature map matrix to obtain a channel_size×t feature map matrix;
performing dimensional transformation on the channel_size×t feature map matrix, and restoring t to h×w×z to obtain a channel_size×h×w×z feature map matrix;
performing dimensional interchange on the channel_size×h×w×z feature map matrix to obtain a h×w×z×channel_size feature map matrix;
performing weighting summation on the h×w×z×channel_size feature map matrix and the feature map matrix of at least one target object with the first feature map matrix of (h/2)×(w/2)×(z/2)×kernel_size with a weighting weight, that is, enhancing matrix channels in the first feature map matrix of each target object to obtain a channel-level weighting matrix of h1×w1×z1×channel_size of at least one target object.

2. The method according to claim 1, **characterized in that** the step of adjusting, by the pixel-level saliency enhancement module, a parameter in the first feature map matrix of each target object to determine a pixel-level weighting matrix of each target object comprises:
performing, by the pixel-level saliency enhancement module, dimensional transformation, dimensional adjustment and nonlinear processing on the feature map matrix of each target object to obtain a second feature map matrix of the target object; and
performing weighting summation on the first feature map matrix of each target object and the second feature map matrix of the target object to obtain a pixel-level weighting matrix of each target object.

3. The method according to claim 1, **characterized in that**, the step of enhancing, by the channel-level saliency enhancement module, a matrix channel in the first feature map matrix of each target object to determine a channel-level weighting matrix of each target object comprises:
performing, by the channel-level saliency enhancement module, dimensional transformation, dimensional adjustment and nonlinear processing on the first feature map matrix of each target object to obtain a third feature map matrix of each target object; and
performing weighting summation on the first feature map matrix of each target object and the third feature map matrix of the target object to obtain a channel-level weighting matrix of each target object.

4. The method according to claim 1, **characterized in that**, the extraction module comprises a convolution module and a 3D residual convolution module, and extracting, by the extraction module, a first feature map matrix of at least one target object of the image to be segmented comprises:
extracting, by the convolution module, a feature map matrix of at least one target object of the image to be recognized; and
extracting, by the 3D residual convolution module, the feature map matrix of each target object to obtain a first feature map matrix of at least one target object of the image to be recognized.

5. An image segmentation apparatus (400), **characterized by** comprising:
an acquiring unit (401), configured to acquire an image to be segmented with a height of h, a width of w and a thickness of z; and
a 3D convolutional neural network model (402), configured to determine a segmented image of each target object after parameter adjustment in the image to be segmented, wherein the 3D convolutional neural network model is pre-trained based on image sample data, and the 3D convolutional neural network model comprises an extraction module, a pixel-level saliency enhancement module, a channel-level saliency enhancement module and a 3D residual deconvolution module;
the extraction module, configured to extract a first feature map matrix of at least one target object of the image to be segmented;
the pixel-level saliency enhancement module, configured to adjust a parameter in the first feature map matrix of each target object to determine a pixel-level weighting matrix of each target object, wherein the parameter in the first feature map matrix of each target object is the pixel of the target object;
the channel-level saliency enhancement module, configured to enhance a matrix channel in the first feature map matrix of each target object to determine a channel-level weighting matrix of each target object; and
the 3D residual deconvolution module, configured to calculate the sum of the pixel-level weighting matrix and the channel-level weighting matrix of each target object to obtain a target matrix of the target object, increasing the size of the target matrix of each target object, and carrying out restoration processing on the target matrix after size increase of each target object to determine a segmented image of each target object after parameter adjustment in the image to be segmented;
wherein the pixel-level saliency enhancement module is configured to:
convolve (h/2)×(w/2)×(z/2)×kernel_size through the 3×3×3×kernel_size convolution layer of the pixel-level saliency enhancement module to obtain a h×w×z×kernel_size feature map matrix, wherein the kernel_size represents the number of channels and also the number of the target objects;
perform dimensional transformation on the h×w×z×kernel_size feature map matrix to obtain a batchsize×t×kernel_size feature map matrix, specifically, traversing the h×w×z of the target object through the feature map matrix of h×w×z×kernel_size according to batchsize and kernel_size, and expanding h×w×z into a one-dimensional high-dimensional column vector to obtain a batchsize×t×kernel_size feature map matrix, wherein t=h×w×z;
adjust the dimension of the t×kernel_size feature map matrix to obtain a kernel_size×t feature map matrix;
multiply the kernel_size×t feature map matrix by the t×kernel_size feature map matrix to obtain a t×t feature map matrix;
perform nonlinear mapping on the t×t feature map matrix through an activation function to obtain a nonlinear t×t feature map matrix;
perform dimensional transformation on the feature map matrix of at least one target object with the first feature map matrix of (h/2)×(w/2)×(z/2)×kernel_size, specifically, traversing (h/2)×(w/2)×(z/2) of the target object according to batchsize and kernel_size, and expanding (h/2)×(w/2)×(z/2) into a one-dimensional high-dimensional column vector to obtain a batchsize×t1×kernel_size feature map matrix, wherein t1=(h/2)×(w/2)×(z/2), and batchsize is equal to 1;
perform dimensional transformation on t1 and kernel_size in t1×kernel_size to obtain a kernel_size×t1 feature map matrix;
multiply the kernel_size×t1 feature map matrix by the nonlinear t×tfeature map matrix to obtain a kernel_size×t feature map matrix;
restore the kernel_size×t feature map matrix to obtain a kernel_sizet×h×w×z feature map matrix;
perform dimensional transformation on the kernel_sizet×h×w×z feature map matrix to obtain a h×w×z×kernel_sizet feature map matrix;
perform weighting summation on the kernel_sizet×h×w×z feature map matrix and the feature map matrix of at least one target object with the first feature map matrix of (h/2)×(w/2)×(z/2) ×kernel_size with a weighting weight; and
wherein the channel-level saliency enhancement module is configured to:
convolve the (h/2)x(w/2)x(z/2)xchannel-size first feature map matrix through a 3×3×3×channel_size convolution layer of the channel-level saliency enhancement module to obtain a h×w×z×channel_size feature map matrix, wherein the channel_size represents the number of channels and also the number of target objects;
perform dimensional transformation on the h×w×z×channel_size feature map matrix to obtain a batchsize×t×channel_size feature map matrix, specifically, traversing the h×w×z of the target object through the feature map matrix of batchsize×h×w×z×channel _size according to batchsize and channel_size, and expanding h×w×z into a one-dimensional high-dimensional column vector to obtain a batchsize×t×channel_size feature map matrix, wherein t=h×w×z;
perform dimensional transformation on the (h/2)×(w/2)×(z/2)×kernel_size first feature map matrix to obtain a batchsize×t1×channel_size feature map matrix, specifically, traversing the (h/2)×(w/2)×(z/2) of the target object through the batchsize×(h/2)×(w/2)×(z/2)×kernel_size first feature map matrix according to batchsize and channel_size, and expanding (h/2)×(w/2)×(z/2) into a one-dimensional high-dimensional column vector to obtain a batchsize×t1×channel_size feature map matrix, wherein t=h×w×z;
perform dimensional transformation on the t1×channel_size feature map matrix to obtain a channel_size×t1 feature map matrix;
multiply the t1×channel_size feature map matrix by the channel_size×t1 feature map matrix to obtain a channel_size×channel_size feature map matrix;
traverse the h×w×z of the target object through the channel_size×channel_size feature map matrix according to batchsize and channel_size, expanding h×w×z into a one-dimensional high-dimensional column vector, and performing a pooling operation on the high-dimensional column vector, that is, changing the vector of each channel_size dimension into a floating-point number to obtain a channel_size×1 feature map matrix;
perform nonlinear mapping on the channel_size×1 feature map matrix through an activation function to obtain a nonlinear channel_size×1 feature map matrix;
multiply the nonlinear channel_size×1 feature map matrix by the channel_size×channel_size feature map matrix to obtain a channel_size×channel_size feature map matrix;
multiply the channel_size×channel_size feature map matrix by the t×channel_size feature map matrix to obtain a channel_size×t feature map matrix, wherein the channel_size×t feature map matrix is a three-dimensional feature map matrix;
traverse the h×w×z of the target object through the channel_size×t feature map matrix according to batchsize and channel_size, expanding h×w×z into a t-dimensional high-dimensional column vector, and performing a pooling operation on the high-dimensional column vector, that is, changing the vector of each channel_size dimension into a floating-point number to obtain a channel_size×1 feature map matrix;
perform nonlinear mapping on the channel_size×1 feature map matrix through an activation function to obtain a nonlinear channel_size×1 feature map matrix;
multiply the nonlinear channel_size×1 feature map matrix by the channel_size×t feature map matrix to obtain a channel_size×t feature map matrix;
perform dimensional transformation on the channel_size×t feature map matrix, and restoring t to h×w×z to obtain a channel_size×h×w×z feature map matrix;
perform dimensional interchange on the channel_size×h×w×z feature map matrix to obtain a h×w×z×channel_size feature map matrix;
perform weighting summation on the h×w×z×channel_size feature map matrix and the feature map matrix of at least one target object with the first feature map matrix of (h/2)×(w/2)×(z/2)×kernel_size with a weighting weight, that is, enhancing matrix channels in the first feature map matrix of each target object to obtain a channel-level weighting matrix of h1×w1×z1×channel_size of at least one target object.

6. The apparatus according to claim 5, **characterized in that**, a pixel-level weighting matrix determining unit comprises:
a second feature map matrix determining unit, configured to perform dimensional transformation, dimensional adjustment and nonlinear processing on the feature map matrix of each target object using the pixel-level saliency enhancement module to obtain a second feature map matrix of the target object; and
a pixel-level weighting matrix determining subunit, configured to perform weighting summation on the first feature map matrix of each target object and the second feature map matrix of the target object to obtain a pixel-level weighting matrix of each target object.

7. The apparatus according to claim 5, **characterized in that**, a channel-level weighting matrix determining unit comprises:
a third feature map matrix determining unit, configured to perform dimensional transformation, dimensional adjustment and nonlinear processing on the first feature map matrix of each target object using the channel-level saliency enhancement module to obtain a third feature map matrix of each target object; and
a channel-level weighting matrix determining subunit, configured to perform weighting summation on the first feature map matrix of each target object and the third feature map matrix of the target object to obtain a channel-level weighting matrix of each target object.

8. The apparatus according to claim 5, **characterized in that**, the extraction module comprises:
a convolution module, configured to extract a feature map matrix of at least one target object of the image to be recognized; and
a 3D residual convolution module, configured to extract the feature map matrix of each target object to obtain a first feature map matrix of at least one target object of the image to be recognized.

## Patentansprüche

1. Computerimplementiertes Bildsegmentierungsverfahren, **dadurch gekennzeichnet, dass** es Folgendes umfasst:
Erfassen (S101) eines zu segmentierenden Bildes mit einer Höhe h, einer Breite w und einer Dicke z; und
Bestimmen (S102) eines segmentierten Bildes jedes Zielobjekts nach einer Parameteranpassung in dem zu segmentierenden Bild durch ein voreingestelltes 3D-Faltungs-Neuronennetzwerkmodell, wobei das 3D-Faltungs-Neuronennetzwerkmodell auf der Grundlage von Bildmusterdaten vorab trainiert wird und das 3D-Faltungs-Neuronennetzwerkmodell ein Extraktionsmodul, ein Modul zur Hervorhebung von Merkmalen auf Pixelebene, ein Modul zur Hervorhebung von Merkmalen auf Kanalebene und ein 3D-Restentfaltungsmodul umfasst; und insbesondere der Prozess des Bestimmens eines segmentierten Bildes jedes Zielobjekts nach der Parameteranpassung in dem zu segmentierenden Bild durch das voreingestellte 3D-Faltungs-Neuronennetzwerkmodell umfasst:
Extrahieren (S201) einer ersten Merkmals-Kartenmatrix von mindestens einem Zielobjekt des zu segmentierenden Bildes durch das Extraktionsmodul;
Anpassen (S202) eines Parameters in der ersten Merkmals-Zuordnungsmatrix jedes Zielobjekts durch das Modul zur Hervorhebung der Salienz auf Pixelebene, um eine Gewichtungsmatrix auf Pixelebene jedes Zielobjekts zu bestimmen, wobei der Parameter in der ersten Merkmals-Zuordnungsmatrix jedes Zielobjekts das Pixel des Zielobjekts ist;
Verbessern (S203) durch das Modul zur Hervorhebung auf Kanalebene eines Matrixkanals in der ersten Merkmals-Zuordnungsmatrix jedes Zielobjekts, um eine Gewichtungsmatrix auf Kanalebene jedes Zielobjekts zu bestimmen; und
Berechnen (S204) der Summe der Gewichtungsmatrix auf Pixelebene und der Gewichtungsmatrix auf Kanalebene jedes Zielobjekts durch das 3D-Rest-Dekonvolutionsmodul, um eine Zielmatrix des Zielobjekts zu erlangen, Vergrößern der Zielmatrix jedes Zielobjekts und Durchführen einer Wiederherstellungsverarbeitung an der Zielmatrix nach der Vergrößerung jedes Zielobjekts, um ein segmentiertes Bild jedes Zielobjekts nach der Parameteranpassung in dem zu segmentierenden Bild zu bestimmen;
wobei das Anpassen (S202) durch das Modul zur Hervorhebung auf Pixelebene eines Parameters in der ersten Merkmals-Zuordnungsmatrix jedes Zielobjekts zur Bestimmung einer Gewichtungsmatrix auf Pixelebene jedes Zielobjekts Folgendes umfasst:
Falten (h/2)x (w/2)x (z/2)×kernel_size durch die 3×3×3×kernel_size-Faltungsschicht des Moduls zur Hervorhebung von Salienz auf Pixelebene, um eine Merkmalsmatrix h×w×z×kernel_size zu erlangen, wobei Kernelgrößedie Anzahl der Kanäle und auch die Anzahl der Zielobjekte darstellt;
Durchführen einer Dimensionsumwandlung an der Merkmalszuordnungsmatrix h×w×z×kernel_size, um eine Merkmalszuordnungsmatrix batchsize×t×kernel_size zu erhalten, insbesondere Durchlaufen von h×w×z des Zielobjekts durch die Merkmalszuordnungsmatrix h×w×z×kernel_size gemäß der Batchgröße und der Kernelgröße, und h×w×z in einen eindimensionalen hochdimensionalen Spaltenvektor erweitert, um eine Feature Map-Matrix der Größe Batchgröße×t×kernel_size zu erlangen, wobei t=h×w×z;
Anpassen der Dimension der Merkmalszuordnungsmatrix t×kernel_size, um eine Merkmalszuordnungsmatrix kernel _size×t zu erlangen;
Multiplizieren der Merkmals-Matrix kernel _size×t mit der Merkmals-Matrix t×kernel_size, um eine Merkmals-Matrix t×tzu erlangen;
Durchführen eines nichtlinearen Zuordnens auf der Merkmals-Matrix t×tdurch eine Aktivierungsfunktion, um eine nichtlineare Merkmals-Matrix t×tzu erlangen;
Durchführen einer dimensionalen Transformation an der Merkmal-Kartenmatrix von mindestens einem Zielobjekt mit der ersten Merkmal-Kartenmatrix von (h/2)×(w/2)×(z/2)×kernel_size, insbesondere Durchlaufen von (h/2)x(w/2)x(z/2) des Zielobjekts gemäß der Batchgröße und kernel_size und Expandieren (h/2)×(w/2)×(z/2) in einen eindimensionalen hochdimensionalen Spaltenvektor, um eine Merkmalszuordnungsmatrix der Größe batchsize×t1×kernel_size zu erlangen, wobei t1=(h/2)×(w/2)×(z/2) und batchsize gleich 1 ist;
Durchführen einer Dimensionsumwandlung an t1 und kernel_size in t1×kernel_size, um eine Merkmalsmatrix kernel_size×t1 zu erlangen;
Multiplizieren der Matrix "Merkmal-Karte" kernel_size×t1 mit der nichtlinearen Matrix "Merkmal-Karte" t×t, um eine Matrix "Merkmal-Karte" kernel_size×t zu erlangen;
Wiederherstellen der Feature-Map-Matrix kernel_size×t, um eine Feature-Map-Matrix kernel_size×h×w×z zu erlangen;
Durchführen einer Dimensionsumwandlung an der Merkmalsmatrix kernel_sizet×h×w×z, um eine Merkmalsmatrix h×w×z×kernel_sizet zu erlangen;
Durchführen einer Gewichtungssummierung auf der Merkmals-Matrix kernel_sizet×h×w×z und der Merkmals-Matrix mindestens eines Zielobjekts mit der ersten Merkmals-Matrix von (h/2)×(w/2)×(z/2)×kernel_size mit einem Gewichtungsgewicht; und wobei das Verstärken (S203) durch das Modul zur Hervorhebung auf Kanalebene einen Matrixkanal in der ersten Merkmals-Zuordnungsmatrix jedes Zielobjekts bestimmt, um eine Gewichtungsmatrix auf Kanalebene jedes Zielobjekts zu bestimmen, Folgendes umfassend:
Falten der ersten Merkmals-Matrix (h/2)×(w/2)×(z/2)×channel_size durch eine Faltungsschicht 3×3×3×channel_size des Moduls zur Hervorhebung der Salienz auf Kanalebene, um eine Merkmals-Matrix h×w×z×channel_size zu erlangen, wobei channel_size die Anzahl der Kanäle und auch die Anzahl der Zielobjekte darstellt;
Durchführen einer Dimensionsumwandlung an der Merkmals-Matrix h×w×z×channel_size, um eine Merkmals-Matrix batchsize×t×channel_size zu erhalten, insbesondere Durchlaufen von h×w×z des Zielobjekts durch die Merkmals-Matrix batchsize×h×w×z×channel_size gemäß der batchsize und channel_size, und h×w×z in einen eindimensionalen hochdimensionalen Spaltenvektor erweitert, um eine batchsize×t×channel_size Feature Map-Matrix zu erlangen, wobei t=h×w×z;
Durchführen einer Dimensionsumwandlung an der ersten Merkmals-Matrix (h/2)×(w/2)×(z/2)×kernel_size, um eine Merkmals-Zuordnungsmatrix der Größe batchsize×t1×channel_size zu erhalten, insbesondere durch Durchlaufen des (h/2)×(w/2)×(z/2) des Zielobjekts durch die erste Merkmals-Zuordnungsmatrix der Größe batchsize×(h/2)×(w/2)×(z/2)×kernel_size gemäß der Batchgröße und Kanalgröße und Erweitern (h/2)×(w/2)×(z/2) in einen eindimensionalen hochdimensionalen Spaltenvektor, um eine Batchgrößext1xKanalgröße Feature-Map-Matrix zu erlangen, wobei t=h×w×z;
Durchführen einer Dimensionsumwandlung an der Merkmalskarte-Matrix t1xchannel_size, um eine Merkmalskarte-Matrix channel_size×t1 zu erlangen;
Multiplizieren der Merkmalskartenmatrix t1×channel_size mit der Merkmalskartenmatrix channel_size×t1, um eine Merkmalskartenmatrix channel_size×channel_size zu erlangen;
Durchlaufen der h×w×z des Zielobjekts durch die Merkmals-Matrix der channel_size×channel_size-Merkmale gemäß der batchsize und channel_size, Erweitern von h×w×z in einen eindimensionalen hochdimensionalen Spaltenvektor und Durchführen einer Pooling-Operation auf dem hochdimensionalen Spaltenvektor, d. h. Ändern des Vektors jeder channel_size-Dimension in eine Gleitkommazahl, um eine channel_size×1-Merkmals-Matrix zu erlangen;
Durchführen einer nichtlinearen Abbildung auf die Merkmals-Matrix channel_size×1 durch eine Aktivierungsfunktion, um eine nichtlineare Merkmals-Matrix channel_size×1 zu erhalten;
Multiplizieren der Matrix der Merkmalskarten mit nichtlinearer channel_size×1 mit der Matrix der Merkmalskarten mit channel_size×channel_size, um eine Matrix der Merkmalskarten mit channel_size×channel_size zu erlangen;
Multiplizieren der Merkmals-Matrix channel_size×channel_size mit der Merkmals-Matrix t×channel_size, um eine Merkmals-Matrix channel_size×t zu erlangen, wobei die Merkmals-Matrix channel_size×t eine dreidimensionale Merkmals-Matrix ist;
Durchlaufen der h×w×z des Zielobjekts durch die Merkmals-Matrix map channel_size×t gemäß der batchsize und channel_size, Erweitern von h×w×z in einen t-dimensionalen hochdimensionalen Spaltenvektor und Durchführen einer Pooling-Operation auf dem hochdimensionalen Spaltenvektor, d. h. Ändern des Vektors jeder channel_size-Dimension in eine Gleitkommazahl, um eine channel_size×1 Merkmals-Matrix zu erlangen;
Durchführen einer nichtlinearen Abbildung auf die Merkmals-Matrix channel_size×1 durch eine Aktivierungsfunktion, um eine nichtlineare Merkmals-Matrix channel_size×1 zu erhalten;
Multiplizieren der Matrix "Feature Map" mit nichtlinearer channel_size×1 mit der Matrix "Feature Map" mit Kanalgröße × t, um eine Matrix "Feature Map" mit channel_size×t zu erlangen;
Durchführen einer nichtlinearen Zuordnung auf der Merkmal-Matrix channel_size×t, und Wiederherstellen von t zu h×b×z, um eine nichtlineare Merkmal-Matrix channel_size×h×w×z zu erlangen;
Durchführen eines dimensionalen Austauschs in der Merkmalskarte-Matrix channel_size×h×w×z, um eine Merkmalskarte-Matrix h×w×z×channel_size zu erlangen;
Durchführen einer Gewichtungssummierung auf der Merkmals-Matrixkarte h×w×z×channel_size und der Merkmals-Matrixkarte von mindestens einem Zielobjekt mit der ersten Merkmals-Matrixkarte von (h/2)×(w/2)×(z/2)× Kerngröße mit einem Gewichtungsgewicht, d. h. Verbessern von Matrixkanälen in der ersten Merkmals-Zuordnungsmatrix jedes Zielobjekts, um eine Gewichtungsmatrix auf Kanalebene von h1×w1×z1×Kanalgröße von mindestens einem Zielobjekt zu erlangen.

2. Verfahren nach Anspruch 1, **dadurch gekennzeichnet, dass** der Schritt des Anpassens eines Parameters in der ersten Merkmals-Matrix jedes Zielobjekts durch das Modul zur Hervorhebungsverstärkung auf Pixelebene, um eine Gewichtungsmatrix auf Pixelebene jedes Zielobjekts zu bestimmen, Folgendes umfasst:
Durchführen einer dimensionalen Transformation, einer dimensionalen Anpassung und einer nichtlinearen Verarbeitung der Merkmal-Matrix jedes Zielobjekts durch das Modul zur Hervorhebung der Salienz auf Pixelebene, um eine zweite Merkmal-Matrix des Zielobjekts zu erlangen; und
das Durchführen einer Gewichtungssummierung auf der ersten Merkmal-Kartenmatrix jedes Zielobjekts und der zweiten Merkmal-Kartenmatrix des Zielobjekts, um eine Gewichtungsmatrix auf Pixelebene für jedes Zielobjekt zu erlangen.

3. Verfahren nach Anspruch 1, **dadurch gekennzeichnet, dass** der Schritt des Verbesserns eines Matrixkanals in der ersten Merkmals-Zuordnungsmatrix jedes Zielobjekts durch das Modul zur Verbesserung der Salienz auf Kanalebene, um eine Gewichtungsmatrix auf Kanalebene jedes Zielobjekts zu bestimmen, was Folgendes umfasst:
das Durchführen einer dimensionalen Transformation, einer dimensionalen Anpassung und einer nichtlinearen Verarbeitung der ersten Merkmal-Kartenmatrix jedes Zielobjekts durch das Modul zur Hervorhebung der Kanäle, um eine dritte Merkmal-Kartenmatrix jedes Zielobjekts zu erlangen; und
das Durchführen einer Gewichtungssummierung auf der ersten Merkmal-Kartenmatrix jedes Zielobjekts und der dritten Merkmal-Kartenmatrix des Zielobjekts, um eine Gewichtungsmatrix auf Kanalebene für jedes Zielobjekt zu erlangen.

4. Verfahren nach Anspruch 1, **dadurch gekennzeichnet, dass** das Extraktionsmodul ein Faltungsmodul und ein 3D-Restfaltungmodul umfasst und das Extrahieren einer ersten Merkmals-Kartenmatrix von mindestens einem Zielobjekt des zu segmentierenden Bildes durch das Extraktionsmodul umfasst:
Das Extrahieren einer Merkmals-Matrix durch das Faltungsmodul von mindestens einem Zielobjekt des zu erkennenden Bildes; und
das Extrahieren der Merkmals-Kartenmatrix jedes Zielobjekts durch das 3D-Restfaltenmodul, um eine erste Merkmals-Kartenmatrix von mindestens einem Zielobjekt des zu erkennenden Bildes zu erlangen.

5. Vorrichtung zur Bildsegmentierung (400), **dadurch gekennzeichnet, dass** sie Folgendes umfasst:
eine Erfassungseinheit (401), die so konfiguriert ist, dass sie ein zu segmentierendes Bild mit einer Höhe h, einer Breite w und einer Dicke z erfasst; und
ein 3D-Faltungs-Neuronales-Netz-Modell (402), das so konfiguriert ist, dass es ein segmentiertes Bild jedes Zielobjekts nach der Parameteranpassung in dem zu segmentierenden Bild bestimmt, wobei das 3D-Faltungs-Neuronales-Netz-Modell auf der Grundlage von Bildmusterdaten vorab trainiert wird und das 3D-Faltungs-Neuronales-Netz-Modell ein Extraktionsmodul, ein Modul zur Hervorhebung auf Pixelebene, ein Modul zur Hervorhebung auf Kanalebene und ein 3D-Rest-Entfaltungsmodul umfasst;
das Extraktionsmodul, das so konfiguriert ist, dass es eine erste Merkmals-Kartenmatrix von mindestens einem Zielobjekt des zu segmentierenden Bildes extrahiert;
das Modul zur Hervorhebungsverbesserung auf Pixelebene, das so konfiguriert ist, dass es einen Parameter in der ersten Merkmals-Zuordnungsmatrix jedes Zielobjekts anpasst, um eine Gewichtungsmatrix auf Pixelebene jedes Zielobjekts zu bestimmen, wobei der Parameter in der ersten Merkmals-Zuordnungsmatrix jedes Zielobjekts das Pixel des Zielobjekts ist;
Verbesserung durch das Modul zur Hervorhebung auf Kanalebene eines Matrixkanals in der ersten Merkmals-Zuordnungsmatrix jedes Zielobjekts, um eine Gewichtungsmatrix auf Kanalebene jedes Zielobjekts zu bestimmen; und
das 3D-Restentfaltungsmodul, das so konfiguriert ist, dass es die Summe der Gewichtungsmatrix auf Pixelebene und der Gewichtungsmatrix auf Kanalebene jedes Zielobjekts berechnet, um eine Zielmatrix des Zielobjekts zu erlangen, die Größe der Zielmatrix jedes Zielobjekts erhöht und die Wiederherstellungsverarbeitung der Zielmatrix nach der Vergrößerung jedes Zielobjekts durchführt, um ein segmentiertes Bild jedes Zielobjekts nach der Parameteranpassung in dem zu segmentierenden Bild zu bestimmen;
wobei das Modul zur Hervorhebung auf Pixelebene konfiguriert ist, um
(h/2)×(w/2)×(z/2)×Kerngröße durch die 3×3×3×Kerngröße-Faltungsschicht des Moduls zur Hervorhebung von Salienz auf Pixelebene zu falten, um eine Merkmalsmatrix der Größe h×w×z×Kerngröße zu erlangen, wobei die Kerngröße die Anzahl der Kanäle und auch die Anzahl der Zielobjekte darstellt;
eine dimensionale Transformation an der Merkmalsabbildungsmatrix h×b×z×kernel_size durchzuführen, um eine Merkmalsabbildungsmatrix batchsize×t×kernel_size zu erhalten, insbesondere Durchlaufen von h×b×z des Zielobjekts durch die Merkmalsabbildungsmatrix hxbx z×kernel_size gemäß der Batchgröße und kernel_size, und Erweitern von h×w×z in einen eindimensionalen hochdimensionalen Spaltenvektor, um eine "Feature Map"-Matrix der Größe batchsize×t×kernel_size zu erhalten, wobei t=h×w×z;
die Dimension der Merkmalsabbildungsmatrix t×kernel_size anzupassen, um eine Merkmalsabbildungsmatrixkernel_size×t zu erlangen;
die Merkmalszuordnungsmatrix kernel_size×t mit der Merkmalszuordnungsmatrix t×kernel_size zu multiplizieen, um eine Merkmalszuordnungsmatrix t×t zu erlangen;
eine nichtlineare Abbildung auf der t×t-MerkmalsAbbildungsmatrix durch eine Aktivierungsfunktion durchzuführen, um eine nichtlineare t×t-Merkmals-Abbildungsmatrix zu erlangen;
eine dimensionale Transformation der Merkmal-Kartenmatrix von mindestens einem Zielobjekt mit der ersten Merkmal-Kartenmatrix von (h/2)×(w/2)×(z/2)×Kerngröße durchzuführen, insbesondere (h/2)×(w/2)×(z/2) des Zielobjekts gemäß der Stapelgröße und Kerngröße durchläuft und (h/2)×(w/2)×(z/2) in einen eindimensionalen hochdimensionalen Spaltenvektor expandiert, um eine Merkmalszuordnungsmatrix der Größe batchsize×t1×kernel_size zu erlangen, wobei t1=(h/2)×(w/2)×(z/2) und batchsize gleich 1 ist;
eine dimensionale Transformation an t1 und kernel_size in t1×kernel_size durchzuführen, um eine Merkmalsmatrixkernel_size×t1 zu erlangen;
die Merkmalszuordnungsmatrix kernel_size×t1 mit der nichtlinearen Merkmalszuordnungsmatrix t×t zu multiplizieren, um eine Merkmalszuordnungsmatrix kernel_size×t zu erlangen;
die Merkmalsabbildungsmatrix kernel_size×t wiederherzustellen, um eine Merkmalsabbildungsmatrixkernel_size×h×w×z zu erlangen;
eine dimensionale Transformation der Merkmalsmatrix kernel_sizet×h×w×z durchzuführen, um eine Merkmalsmatrixh×w×z×kernel_sizet zu erlangen;
eine Gewichtungssummierung der Merkmalsabbildungsmatrix kernel_sizet×h×w×z und der Merkmalsabbildungsmatrix mindestens eines Zielobjekts mit der ersten Merkmalsabbildungsmatrix(h/2)×(w/2)×(z/2)×kernel_size mit einem Gewichtungsgewicht durchzuführen; und
wobei das Modul zur Hervorhebung auf Kanalebene konfiguriert ist, um:
die erste Merkmals-Matrix (h/2)×(w/2)×(z/2)×Kanalgröße durch eine Faltungsschicht 3x3x3xKanalgröße des Moduls zur Hervorhebung von Merkmalen auf Kanalebene zu falten, um eine Merkmals-Matrix hxwxzxKanalgröße zu erlangen, wobei Kanalgröße die Anzahl der Kanäle und auch die Anzahl der Zielobjekte darstellt;
eine dimensionale Transformation an der Merkmalsabbildungsmatrix h×w×z×Kanalgröße durchuzuführen, um eine Merkmalsabbildungsmatrix Losgröße×t×Kanalgröße zu erhalten, insbesondere das h×w×z des Zielobjekts durch die Merkmalsabbildungsmatrix Losgröße×h× w×z×channel_size gemäß der batchsize und channel_size, und h×w×z in einen eindimensionalen hochdimensionalen Spaltenvektor erweitert, um eine batchsize×t×channel_size Feature Map-Matrix zu erlangen, wobei t=h×w×z;
eine dimensionale Transformationa n der ersten Merkmals-Matrix (h/2)×(w/2)×(z/2)×kernel_size durchzuführen, um eine MerkmalsMatrix der Größe batchsize×t1×channel_size zu erhalten, insbesondere durch Durchlaufen der (h/2)×(w/2)×(z/2) des Zielobjekts durch die erste Merkmals-Matrix der Größe batchsize×(h/2)× (w/2)×(z/2)×kernel_size ersten Feature-Map-Matrix gemäß der Batchgröße und Kanalgröße durchläuft und Erweitern (h/2)×(w/2)×(z/2) in einen eindimensionalen hochdimensionalen Spaltenvektor, um eine Batchgrößext1xKanalgröße Feature-Map-Matrix zu erlangen, wobei t=h×w×z;
eine dimensionale Transformation der Merkmalsmatrix t1×channel_size durchzuführen, um eine Merkmalsmatrixchannel_size×t1 zu erlangen;
die Merkmalsabbildungsmatrix t1×channel_size mit der Merkmalsabbildungsmatrix channel_size×t1 zu multiplizieren, um eine Merkmalsabbildungsmatrix channel_size×channel_size zu erlangen;
das h×w×z des Zielobjekts durch die Merkmals-Zuordnungsmatrix mit Kanalgröße×Kanalgröße gemäß der Stapelgröße und Kanalgröße zu durchlaufen, h×w×z in einen eindimensionalen hochdimensionalen Spaltenvektor zu erweitern und eine Pooling-Operation an dem hochdimensionalen Spaltenvektor durchzuführen, d. h. den Vektor jeder Kanalgrößendimension in eine Gleitkommazahl zu ändern, um eine Kanalgröße×1-Merkmals-Zuordnungsmatrix zu erlangen;
eine nichtlineare Abbildung auf der Merkmalsmatrix der Kanalgröße x 1 durch eine Aktivierungsfunktion durchzuführen, um eine nichtlineare Merkmalsmatrix der Kanalgröße x 1 zu erhalten;
die nichtlineare Merkmalsabbildungsmatrix channel_size×1 mit der Merkmalsabbildungsmatrixchannel_size×channel_size zu multiplizieren, um eine Merkmalsabbildungsmatrix channel_size×channel_size zu erlangen;
die Merkmalsabbildungsmatrix channel_size×channel_size mit der Merkmalsabbildungsmatrix t×channel_size zu multiplizieren, um eine Merkmalsabbildungsmatrix channel_size×t zu erlangen, wobei die Merkmalsabbildungsmatrix channel_size×t eine dreidimensionale Merkmalsabbildungsmatrix ist;
das h×w×z des Zielobjekts durch die Merkmals-Matrix channel_size×t gemäß der Batchgröße und channel_size zu durchlaufen, h×w×z in einen t-dimensionalen hochdimensionalen Spaltenvektor zu erweitern und eine Pooling-Operation an dem hochdimensionalen Spaltenvektor durchzuführen, d. h. den Vektor jeder channel_size-Dimension in eine Gleitkommazahl zu ändern, um eine channel_size×1 Merkmals-Matrix zu erlangen;
eine nichtlineare Abbildung auf der Merkmalsmatrix der Kanalgröße x 1 durch eine Aktivierungsfunktion durchzuführen, um eine nichtlineare Merkmalsmatrix der Kanalgröße x 1 zu erhalten;
die nichtlineare Merkmalsabbildungsmatrix channel_size×1 mit der Merkmalsabbildungsmatrix channel_size×t zu multiplizieren, um eine Merkmalsabbildungsmatrix channel_size×t zu erlangen;
eine dimensionale Transformation der Merkmalszuordnungsmatrix der Kanalgröße × t durchzuführen und t auf h x w x z zurückgesetzt wird, um eine Merkmalszuordnungsmatrix der Kanalgröße x h x w x z zu erlangen;
eine dimensionale Vertauschung an der Merkmalszuordnungsmatrix channel_size×h×w×z durchzuführen, um eine Merkmalszuordnungsmatrix h×w×z×channel_size zu erlangen;
eine Gewichtungssummierung an der Merkmalsabbildungsmatrix h×w×z×Kanalgröße und der Merkmalsabbildungsmatrix mindestens eines Zielobjekts mit der ersten Merkmalsabbildungsmatrix(h/2)×(w/2)×(z/2)× Kernelgröße mit einem Gewichtungsgewicht durchzuführen, d. h. durch die Verbesserung der Matrixkanäle in der ersten MerkmalsZuordnungsmatrix jedes Zielobjekts, um eine Gewichtungsmatrix auf Kanalebene von h1×w1×z1×Kanalgröße von mindestens einem Zielobjekt zu erlangen.

6. Vorrichtung nach Anspruch 5, **dadurch gekennzeichnet, dass** eine Gewichtungsmatrix-Bestimmungseinheit auf Pixelebene Folgendes umfasst:
eine zweite Merkmal-Kartenmatrix-Bestimmungseinheit, die so konfiguriert ist, dass sie eine dimensionale Transformation, eine dimensionale Anpassung und eine nichtlineare Verarbeitung der Merkmal-Kartenmatrix jedes Zielobjekts unter Verwendung des Moduls zur Hervorhebung der Salienz auf Pixelebene durchführt, um eine zweite Merkmal-Kartenmatrix des Zielobjekts zu erlangen; und
eine Gewichtungsmatrix auf Pixelebene, die die Untereinheit bestimmt und konfiguriert ist, um eine Gewichtungssummierung auf der ersten Merkmal-Kartenmatrix jedes Zielobjekts und der zweiten Merkmal-Kartenmatrix des Zielobjekts durchzuführen, um eine Gewichtungsmatrix auf Pixelebene für jedes Zielobjekt zu erlangen.

7. Vorrichtung nach Anspruch 5, **dadurch gekennzeichnet, dass** eine Einheit zur Bestimmung einer Gewichtungsmatrix auf Kanalebene umfasst:
eine dritte Merkmal-Kartenmatrix-Bestimmungseinheit, die konfiguriert ist, um eine dimensionale Transformation, eine dimensionale Anpassung und eine nichtlineare Verarbeitung an der ersten Merkmal-Kartenmatrix jedes Zielobjekts unter Verwendung des Moduls zur Hervorhebung der Salienz auf Kanalebene durchzuführen, um eine dritte Merkmal-Kartenmatrix jedes Zielobjekts zu erlangen; und
eine Gewichtungsmatrix auf Kanalebene, die die Untereinheit bestimmt und so konfiguriert ist, dass sie eine Gewichtungssummierung der ersten Merkmals-Kartenmatrix jedes Zielobjekts und der dritten Merkmals-Kartenmatrix des Zielobjekts durchführt, um eine Gewichtungsmatrix auf Kanalebene jedes Zielobjekts zu erlangen.

8. Vorrichtung nach Anspruch 5, **dadurch gekennzeichnet, dass** das Extraktionsmodul Folgendes umfasst:
ein Faltungsmodul, das so konfiguriert ist, dass es eine Merkmal-Matrixkarte von mindestens einem Zielobjekt des zu erkennenden Bildes extrahiert; und
ein 3D-Restfaltenmodul, das so konfiguriert ist, dass es die Merkmal-Kartenmatrix jedes Zielobjekts extrahiert, um eine erste Merkmal-Kartenmatrix von mindestens einem Zielobjekt des zu erkennenden Bildes zu erlangen.

## Revendications

1. Procédé de segmentation d'image mis en œuvre par ordinateur, **caractérisé en ce qu'**il comprend :
l'acquisition (S101) une image à segmenter avec une hauteur de h, une largeur de w et une épaisseur de z ; et
la détermination (S102), par un modèle de réseau neuronal convolutionnel 3D prédéfini, d'une image segmentée de chaque objet cible après ajustement de paramètres dans l'image à segmenter, dans lequel le modèle de réseau neuronal convolutionnel 3D est pré-entraîné sur la base de données d'échantillon d'image, et le modèle de réseau neuronal convolutionnel 3D comprenant un module d'extraction, un module d'amélioration de la saillance au niveau des pixels, un module d'amélioration de la saillance au niveau des canaux et un module de déconvolution résiduelle 3D ; et spécifiquement, le processus de détermination, par le modèle de réseau neuronal convolutionnel 3D prédéfini, d'une image segmentée de chaque objet cible après ajustement de paramètres dans l'image à segmenter comprend :
l'extraction (S201), par le module d'extraction, d'une première matrice de carte de caractéristiques d'au moins un objet cible de l'image à segmenter ;
l'ajustement (S202), par le module d'amélioration de la saillance au niveau des pixels, d'un paramètre dans la première matrice de carte de caractéristiques de chaque objet cible pour déterminer une matrice de pondération au niveau des pixels de chaque objet cible, dans lequel le paramètre dans la première matrice de carte de caractéristiques de chaque objet cible est le pixel de l'objet cible ;
l'amélioration (S203), par le module d'amélioration de la saillance au niveau des canaux, d'un canal de matrice dans la première matrice de carte de caractéristiques de chaque objet cible pour déterminer une matrice de pondération au niveau des canaux de chaque objet cible ; et
le calcul (S204), par le module de déconvolution résiduelle 3D, de la somme de la matrice de pondération au niveau des pixels et de la matrice de pondération au niveau des canaux de chaque objet cible pour obtenir une matrice cible de l'objet cible, l'augmentation de la taille de la matrice cible de chaque objet cible, et la réalisation d'un traitement de restauration sur la matrice cible après augmentation de la taille de chaque objet cible pour déterminer une image segmentée de chaque objet cible après ajustement des paramètres dans l'image à segmenter ;
dans lequel l'ajustement (S202), par le module d'amélioration de la saillance au niveau des pixels, d'un paramètre dans la première matrice de carte de caractéristiques de chaque objet cible pour déterminer une matrice de pondération au niveau des pixels de chaque objet cible comprenant :
la convolution de (h/2)×(w/2)×(z/2)×kernel_size à travers la couche de convolution 3×3×3×kernel_size du module d'amélioration de la saillance au niveau des pixels pour obtenir une matrice de carte de caractéristiques ah×w×z×kernel_size, dans lequel kernel_size représente le nombre de canaux ainsi que le nombre d'objets cibles ;
la réalisation d'une transformation dimensionnelle sur la matrice de carte de caractéristiques h×w×z×kernel_size pour obtenir une matrice de carte de caractéristiques batchsize×t×kernel_size, en particulier, parcourir le h×w×z de l'objet cible à travers la matrice de carte de caractéristiques de h×w×z×kernel_size selon batchsize et kernel_size, et développer h×w×z en un vecteur de colonne unidimensionnel de haute dimension pour obtenir une matrice de carte de caractéristiques batchsize×t×kernel_size, dans lequel t=h×w×z ;
l'ajustement de la dimension de la matrice de carte de caractéristiques t×kernel_size pour obtenir une matrice de carte de caractéristiques kernel_size×t ;
la multiplication de la matrice de carte de caractéristiques kernel_size×t par la matrice de carte de caractéristiques t×kernel_size pour obtenir une matrice de carte de caractéristiques t×t ;
la réalisation d'un mappage non linéaire sur la matrice de carte de caractéristiques t × t via une fonction d'activation pour obtenir une matrice de carte de caractéristiques t × t non linéaire ;
la réalisation d'une transformation dimensionnelle sur la matrice de carte de caractéristiques d'au moins un objet cible avec la première matrice de carte de caractéristiques de (h/2)×(w/2)×(z/2)×kernel_size, en particulier, parcourir (h/2)×(w/2)×(z/2) l'objet cible selon batchsize et kernel_size, et étendre (h/2)x(w/2)x(z/2) en un vecteur de colonne unidimensionnel de haute dimension pour obtenir une matrice de carte de caractéristiques batchsize×t1×kernel_size, dans lequel t1=(h/2)×(w/2)×(z/2), et batchsize est égal à 1 ;
la réalisation d'une transformation dimensionnelle sur t1 et kernel_size dans t1×kernel_size pour obtenir une matrice de carte de caractéristiques kernel_size×t1 ;
la multiplication de la matrice de carte de caractéristiques kernel_size×t1 par la matrice de carte de caractéristiques non linéaire t×t pour obtenir une matrice de carte de caractéristiques kernel_size×t ;
la restauration de la matrice de carte de caractéristiques kernel_size×t pour obtenir une matrice de carte de caractéristiques kernel_sizet×h×w×z ;
la réalisation d'une transformation dimensionnelle sur la matrice de carte de caractéristiques kernel_sizet×h×w×z pour obtenir une matrice de carte de caractéristiques h×w×z×kernel_sizet ;
la réalisation d'une sommation de pondération sur la matrice de carte de caractéristiques kernel_sizet×h×w×z et la matrice de carte de caractéristiques d'au moins un objet cible avec la première matrice de carte de caractéristiques de (h/2)×(w/2)×(z/2)×kernel_size avec un poids de pondération ; et
dans lequel l'amélioration (S203), par le module d'amélioration de la saillance au niveau des canaux, d'un canal de matrice dans la première matrice de carte de caractéristiques de chaque objet cible pour déterminer une matrice de pondération au niveau des canaux de chaque objet cible comprenant :
la convolution de la première matrice de carte de caractéristiques (h/2)×(w/2)×(z/2)×channel_size via une couche de convolution 3×3×3×channel_size du module d'amélioration de la saillance au niveau des canaux pour obtenir une matrice de carte de caractéristiques h×w×z×channel_size, dans lequel channel_size représente le nombre de canaux et également le nombre d'objets cibles ;
la réalisation d'une transformation dimensionnelle sur la matrice de carte de caractéristiques h×w×z×channel_size pour obtenir une matrice de carte de caractéristiques batchsize×t×channel_size, en particulier, parcourir le h×w×z de l'objet cible à travers la matrice de carte de caractéristiques de batchsize×h×w×z×channel_size selon batchsize et channel_size, et développer h×w×z en un vecteur de colonne unidimensionnel de haute dimension pour obtenir une matrice de carte de caractéristiques batchsize×t×channel_size, dans lequel t=h×w×z ;
la réalisation d'une transformation dimensionnelle sur la matrice de carte de caractéristiques (h/2)×(w/2)×(z/2)×kernel_size pour obtenir une matrice de carte de caractéristiques batchsize×t1×channel_size, en particulier, parcourir le (h/2)x(w/2)x(z/2) de l'objet cible à travers la matrice de carte de caractéristiques de batchsize×(h/2)×(w/2)×(z/2)×kernel_size selon batchsize et channel_size, et développer (h/2)×(w/2)×(z/2) en un vecteur de colonne unidimensionnel de haute dimension pour obtenir une matrice de carte de caractéristiques batchsize×t1×channel_size, dans lequel t=h×w×z ;
la réalisation d'une transformation dimensionnelle sur la matrice de carte de caractéristiques t1×channel_size pour obtenir une matrice de carte de caractéristiques channel_size×t1 ;
la multiplication de la matrice de carte de caractéristiques t1×channel_size par la matrice de carte de caractéristiques channel_size×t1 pour obtenir une matrice de carte de caractéristiques channel_size×channel_size ;
la traversée du h×w×z de l'objet cible à travers la matrice de carte de caractéristiques channel_size×channel_size selon batchsize et channel_size, l'extension h×w×z en un vecteur de colonne unidimensionnel de haute dimension, et la réalisation d'une opération de regroupement sur le vecteur de colonne de haute dimension, c'est-à-dire le changement du vecteur de chaque dimension channel_size en un nombre à virgule flottante pour obtenir une matrice de carte de caractéristiques channel_size×1 ;
la réalisation d'un mappage non linéaire sur la matrice de carte de caractéristiques channel_size×1 via une fonction d'activation pour obtenir une matrice de carte de caractéristiques channel_size×1 non linéaire ;
la multiplication de la matrice de carte de caractéristiques non linéaire channel_size×1 par la matrice de carte de caractéristiques channel_size×channel_size pour obtenir une matrice de carte de caractéristiques channel_size×channel_size ;
la multiplication de la matrice de carte de caractéristiques non linéaire channel_size×channel_size par la matrice de carte de caractéristiques t×channel_size pour obtenir une matrice de carte de caractéristiques channel_size×t, dans lequel la matrice de carte de caractéristiques channel_size×t est une matrice de carte de caractéristiques tridimensionnelle ;
la traversée du h×w×z de l'objet cible à travers la matrice de carte de caractéristiques channel_size×t selon batchsize et channel_size, l'extension h×w×z en un vecteur de colonne tridimensionnel de haute dimension, et la réalisation d'une opération de regroupement sur le vecteur de colonne de haute dimension, c'est-à-dire changer le vecteur de chaque dimension channel_size en un nombre à virgule flottante pour obtenir une matrice de carte de caractéristiques channel_size×1 ;
la réalisation d'un mappage non linéaire sur la matrice de carte de caractéristiques channel_size×1 via une fonction d'activation pour obtenir une matrice de carte de caractéristiques channel_size×1 non linéaire ;
la multiplication de la matrice de carte de caractéristiques non linéaire channel_size×1 par la matrice de carte de caractéristiques channel_size×t pour obtenir une matrice de carte de caractéristiques channel_size×t ;
la réalisation d'une transformation dimensionnelle sur la matrice de carte de caractéristiques channel_size×t, et la restauration t à h×w×z pour obtenir une matrice de carte de caractéristiques channel_size×h×w×z ;
la réalisation d'un échange dimensionnel sur la matrice de carte de caractéristiques channel_size×h×w×z pour obtenir une matrice de carte de caractéristiques h×w×z×channel_size ;
la réalisation d'une sommation de pondération sur la matrice de carte de caractéristiques h×w×z×channel_size et la matrice de carte de caractéristiques d'au moins un objet cible avec la première matrice de carte de caractéristiques de (h/2)×(w/2)×(z/2)×kernel_size avec un poids de pondération, c'est-à-dire, l'amélioration des canaux de matrice dans la première matrice de carte de caractéristiques de chaque objet cible pour obtenir une matrice de pondération au niveau des canaux de h1×w1×z1×channel_size d'au moins un objet cible.

2. Procédé selon la revendication 1, **caractérisé en ce que** l'étape d'ajustement, par le module d'amélioration de la saillance au niveau des pixels, d'un paramètre dans la première matrice de carte de caractéristiques de chaque objet cible pour déterminer une matrice de pondération au niveau des pixels de chaque objet cible comprend :
la réalisation, par le module d'amélioration de la saillance au niveau des pixels, d'une transformation dimensionnelle, un ajustement dimensionnel et un traitement non linéaire sur la matrice de carte de caractéristiques de chaque objet cible pour obtenir une seconde matrice de carte de caractéristiques de l'objet cible ; et
la réalisation d'une sommation de pondération sur la première matrice de carte de caractéristiques de chaque objet cible et la seconde matrice de carte de caractéristiques de l'objet cible pour obtenir une matrice de pondération au niveau des pixels de chaque objet cible.

3. Procédé selon la revendication 1, **caractérisé en ce que**, l'étape d'amélioration, par le module d'amélioration de la saillance au niveau des canaux, d'un canal de matrice dans la première matrice de carte de caractéristiques de chaque objet cible pour déterminer une matrice de pondération au niveau des canaux de chaque objet cible comprend :
la réalisation, par le module d'amélioration de la saillance au niveau des canaux, d'une transformation dimensionnelle, un ajustement dimensionnel et un traitement non linéaire sur la première matrice de carte de caractéristiques de chaque objet cible pour obtenir une troisième matrice de carte de caractéristiques de chaque objet cible ; et
la réalisation d'une sommation de pondération sur la première matrice de carte de caractéristiques de chaque objet cible et la troisième matrice de carte de caractéristiques de l'objet cible pour obtenir une matrice de pondération au niveau des canaux de chaque objet cible.

4. Procédé selon la revendication 1, **caractérisé en ce que**, le module d'extraction comprend un module de convolution et un module de convolution résiduelle 3D, et l'extraction, par le module d'extraction, d'une première matrice de carte de caractéristiques d'au moins un objet cible de l'image à segmenter comprend :
l'extraction, par le module de convolution, d'une matrice de carte de caractéristiques d'au moins un objet cible de l'image à reconnaître ; et
l'extraction, par le module de convolution résiduelle 3D, de la matrice de carte de caractéristiques de chaque objet cible pour obtenir une première matrice de carte de caractéristiques d'au moins un objet cible de l'image à reconnaître.

5. Appareil de segmentation d'image (400), **caractérisé en ce qu'**il comprend :
une unité d'acquisition (401), configurée pour acquérir une image à segmenter avec une hauteur de h, une largeur de w et une épaisseur de z ; et
un modèle de réseau neuronal convolutionnel 3D (402), configuré pour déterminer une image segmentée de chaque objet cible après ajustement de paramètres dans l'image à segmenter, dans lequel le modèle de réseau neuronal convolutionnel 3D est pré-entraîné sur la base de données d'échantillon d'image, et le modèle de réseau neuronal convolutionnel 3D comprenant un module d'extraction, un module d'amélioration de la saillance au niveau des pixels, un module d'amélioration de la saillance au niveau des canaux et un module de déconvolution résiduelle 3D ;
le module d'extraction, configuré pour extraire une première matrice de carte de caractéristiques d'au moins un objet cible de l'image à segmenter ;
le module d'amélioration de la saillance au niveau des pixels, configuré pour ajuster un paramètre dans la première matrice de carte de caractéristiques de chaque objet cible pour déterminer une matrice de pondération au niveau des pixels de chaque objet cible, dans lequel le paramètre dans la première matrice de carte de caractéristiques de chaque objet cible est le pixel de l'objet cible ;
le module d'amélioration de la saillance au niveau des canaux, configuré pour améliorer un canal de matrice dans la première matrice de carte de caractéristiques de chaque objet cible pour déterminer une matrice de pondération au niveau des canaux de chaque objet cible ; et
le module de déconvolution résiduelle 3D, configuré pour calculer la somme de la matrice de pondération au niveau des pixels et de la matrice de pondération au niveau des canaux de chaque objet cible pour obtenir une matrice cible de l'objet cible, l'augmentation de la taille de la matrice cible de chaque objet cible, et la réalisation d'un traitement de restauration sur la matrice cible après augmentation de la taille de chaque objet cible pour déterminer une image segmentée de chaque objet cible après ajustement des paramètres dans l'image à segmenter ;
dans lequel le module d'amélioration de la saillance au niveau des pixels est configuré pour :
convoluer (h/2)×(w/2)×(z/2)×kernel_size à travers la couche de convolution 3×3×3×kernel_size du module d'amélioration de la saillance au niveau des pixels pour obtenir une matrice de carte de caractéristiques ah×w×z×kernel_size, dans lequel kernel_size représente le nombre de canaux ainsi que le nombre d'objets cibles ;
réaliser une transformation dimensionnelle sur la matrice de carte de caractéristiques hxwxzxkernel_size pour obtenir une matrice de carte de caractéristiques batchsize×t×kernel_size, en particulier, parcourir le hxwxz de l'objet cible à travers la matrice de carte de caractéristiques de h×w×z×kernel_size selon batchsize et kernel_size, et développer h×w×z en un vecteur de colonne unidimensionnel de haute dimension pour obtenir une matrice de carte de caractéristiques batchsize×t×kernel_size, dans lequel t=h×w×z ;
ajuster la dimension de la matrice de carte de caractéristiques t×kernel_size pour obtenir une matrice de carte de caractéristiques kernel_size×t ;
multiplier la matrice de carte de caractéristiques kernel_size×t par la matrice de carte de caractéristiques t×kernel_size pour obtenir une matrice de carte de caractéristiques t×t ;
réaliser un mappage non linéaire sur la matrice de carte de caractéristiques t × t via une fonction d'activation pour obtenir une matrice de carte de caractéristiques t × t non linéaire ;
réaliser une transformation dimensionnelle sur la matrice de carte de caractéristiques d'au moins un objet cible avec la première matrice de carte de caractéristiques de (h/2)×(w/2)×(z/2)×kernel_size, en particulier, parcourir (h/2)×(w/2)×(z/2) l'objet cible selon batchsize et kernel_size, et étendre (h/2)×(w/2)×(z/2) en un vecteur de colonne unidimensionnel de haute dimension pour obtenir une matrice de carte de caractéristiques batchsize×t1×kernel_size, dans lequel t1=(h/2)×(w/2)×(z/2), et batchsize est égal à 1 ;
réaliser une transformation dimensionnelle sur t1 et kernel_size dans t1×kernel_size pour obtenir une matrice de carte de caractéristiques kernel_size×t1 ;
multiplier la matrice de carte de caractéristiques kernel_size×t1 par la matrice de carte de caractéristiques non linéaire t×t pour obtenir une matrice de carte de caractéristiques kernel_size×t ;
restaurer la matrice de carte de caractéristiques kernel_size×t pour obtenir une matrice de carte de caractéristiques kernel_sizet×h×w×z ;
réaliser une transformation dimensionnelle sur la matrice de carte de caractéristiques kernel_sizet×h×w×z pour obtenir une matrice de carte de caractéristiques h×w×z×kernel_sizet ;
réaliser une sommation de pondération sur la matrice de carte de caractéristiques kernel_sizet×h×w×z et la matrice de carte de caractéristiques d'au moins un objet cible avec la première matrice de carte de caractéristiques de (h/2)×(w/2)×(z/2)×kernel_size avec un poids de pondération ; et
dans lequel le module d'amélioration de la saillance au niveau des canaux est configuré pour :
convoluer la première matrice de carte de caractéristiques (h/2)×(w/2)×(z/2)×channel_size via une couche de convolution 3×3×3×channel_size du module d'amélioration de la saillance au niveau des canaux pour obtenir une matrice de carte de caractéristiques h×w×z×channel_size, dans lequel channel_size représente le nombre de canaux et également le nombre d'objets cibles ;
réaliser une transformation dimensionnelle sur la matrice de carte de caractéristiques h×w×z×channel_size pour obtenir une matrice de carte de caractéristiques batchsize×t×channel_size, en particulier, traverser le hxwxz de l'objet cible à travers la matrice de carte de caractéristiques de batchsizexh×w×z×channel_size selon batchsize et channel_size, et développer h×w×z en un vecteur de colonne unidimensionnel de haute dimension pour obtenir une matrice de carte de caractéristiques batchsize×t×channel_size, dans lequel t=h×w×z ;
réaliser une transformation dimensionnelle sur la matrice de carte de caractéristiques (h/2)×(w/2)×(z/2)×kernel_size pour obtenir une matrice de carte de caractéristiques batchsize×t1×channel_size, en particulier, parcourir le (h/2)×(w/2)×(z/2) de l'objet cible à travers la matrice de carte de caractéristiques de batchsize×(h/2)×(w/2)×(z/2)×kernel_size selon batchsize et channel_size, et développer (h/2)×(w/2)×(z/2) en un vecteur de colonne unidimensionnel de haute dimension pour obtenir une matrice de carte de caractéristiques batchsize×t1×channel_size, dans lequel t=h×w×z ;
réaliser une transformation dimensionnelle sur la matrice de carte de caractéristiques t1×channel_size pour obtenir une matrice de carte de caractéristiques channel_size×t1 ;
multiplier la matrice de carte de caractéristiques t1×channel_size par la matrice de carte de caractéristiques channel_size×t1 pour obtenir une matrice de carte de caractéristiques channel_size×channel_size ;
traverser le h×w×z de l'objet cible à travers la matrice de carte de caractéristiques channel_size×channel_size selon batchsize et channel_size, l'extension h×w×z en un vecteur de colonne unidimensionnel de haute dimension, et la réalisation d'une opération de regroupement sur le vecteur de colonne de haute dimension, c'est-à-dire changer le vecteur de chaque dimension channel_size en un nombre à virgule flottante pour obtenir une matrice de carte de caractéristiques channel_size×1 ;
réaliser un mappage non linéaire sur la matrice de carte de caractéristiques channel_size×1 via une fonction d'activation pour obtenir une matrice de carte de caractéristiques channel_size×1 non linéaire ;
multiplier la matrice de carte de caractéristiques non linéaire channel _size×1 par la matrice de carte de caractéristiques channel_size×channel_size pour obtenir une matrice de carte de caractéristiques channel_size×channel_size ;
multiplier la matrice de carte de caractéristiques non linéaire channel_size×channel_size par la matrice de carte de caractéristiques t×channel_size pour obtenir une matrice de carte de caractéristiques channel_size×t, dans lequel la matrice de carte de caractéristiques channel_size×t est une matrice de carte de caractéristiques tridimensionnelle ;
traverser le h×w×z de l'objet cible à travers la matrice de carte de caractéristiques channel size×t selon batchsize et channel_size, l'extension h×w×z en un vecteur de colonne tridimensionnel de haute dimension, et la réalisation d'une opération de regroupement sur le vecteur de colonne de haute dimension, c'est-à-dire changer le vecteur de chaque dimension channel_size en un nombre à virgule flottante pour obtenir une matrice de carte de caractéristiques channel_size×1 ;
réaliser un mappage non linéaire sur la matrice de carte de caractéristiques channel_size×1 via une fonction d'activation pour obtenir une matrice de carte de caractéristiques channel_size×1 non linéaire ;
multiplier la matrice de carte de caractéristiques non linéaire channel_size×1 par la matrice de carte de caractéristiques channel size×t pour obtenir une matrice de carte de caractéristiques channel_size×t ;
réaliser une transformation dimensionnelle sur la matrice de carte de caractéristiques channel_size×t, et la restauration t à hxwxz pour obtenir une matrice de carte de caractéristiques channel_size×h×w×z ;
réaliser un échange dimensionnel sur la matrice de carte de caractéristiques channel_size×h×w×z pour obtenir une matrice de carte de caractéristiques hxwxzxchannel_size ;
réaliser une sommation de pondération sur la matrice de carte de caractéristiques h×w×z×channel_size et la matrice de carte de caractéristiques d'au moins un objet cible avec la première matrice de carte de caractéristiques de (h/2)×(w/2)×(z/2)×kernel_size avec un poids de pondération, c'est-à-dire, l'amélioration des canaux de matrice dans la première matrice de carte de caractéristiques de chaque objet cible pour obtenir une matrice de pondération au niveau des canaux de h1×w1×z1×channel_size d'au moins un objet cible.

6. Appareil selon la revendication 5, **caractérisé en ce qu'**une unité de détermination de matrice de pondération au niveau des pixels comprend :
une seconde unité de détermination de matrice de carte de caractéristiques d'une transformation dimensionnelle, un ajustement dimensionnel et un traitement non linéaire sur la matrice de carte de caractéristiques de chaque objet cible à l'aide du module d'amélioration de saillance au niveau des pixels pour obtenir une seconde matrice de carte de caractéristiques de l'objet cible ; et
une sous-unité de détermination de matrice de pondération au niveau des pixels, configurée pour réaliser une sommation de pondération sur la première matrice de carte de caractéristiques de chaque objet cible et la seconde matrice de carte de caractéristiques de l'objet cible pour obtenir une matrice de pondération au niveau des pixels de chaque objet cible.

7. Appareil selon la revendication 5, **caractérisé en ce qu'**une unité de détermination de matrice de pondération au niveau des canaux comprend :
une troisième unité de détermination de matrice de carte de caractéristiques d'une transformation dimensionnelle, un ajustement dimensionnel et un traitement non linéaire sur la première matrice de carte de caractéristiques de chaque objet cible à l'aide du module d'amélioration de saillance au niveau des canaux pour obtenir une troisième matrice de carte de caractéristiques de chaque objet cible ; et
une sous-unité de détermination de matrice de pondération au niveau des canaux, configurée pour réaliser une sommation de pondération sur la première matrice de carte de caractéristiques de chaque objet cible et la troisième matrice de carte de caractéristiques de l'objet cible pour obtenir une matrice de pondération au niveau des canaux de chaque objet cible.

8. Appareil selon la revendication 5, **caractérisé en ce que** le module d'extraction comprend :
un module de convolution, configuré pour extraire une matrice de carte de caractéristiques d'au moins un objet cible de l'image à reconnaître ; et
un module de convolution résiduelle 3D, configuré pour extraire la matrice de carte de caractéristiques de chaque objet cible pour obtenir une première matrice de carte de caractéristiques d'au moins un objet cible de l'image à reconnaître.
